# EUROPÄISCHE PATENTSCHRIFT

(11) **EP 4 284 735 B1**
(45) Veröffentlichungstag und Bekanntmachung des Hinweises auf die Patenterteilung: **23.07.2025**
(21) Anmeldenummer: 22706226.2
(22) Anmeldetag: 27.01.2022
(51) Int. Cl.: B65G 1/137, G06Q 10/08, G06Q 10/04, B65G 1/04

(54) **VERFAHREN ZUM EINLAGERN MEHRERER LAGEROBJEKTE UNTERSCHIEDLICHER LAGEROBJEKTTYPE IN EIN LAGERREGAL UND EIN REGALLAGERSYSTEM HIERFÜR**
METHOD FOR STORING A PLURALITY OF STORAGE OBJECTS OF DIFFERENT STORAGE-OBJECT TYPES IN A STORAGE RACK UNIT, AND A RACK STORAGE SYSTEM FOR THIS PURPOSE
PROCÉDÉ POUR EMMAGASINER PLUSIEURS OBJETS DE TYPES DIFFÉRENTS DANS UN RAYONNAGE DE STOCKAGE ET SYSTÈME DE STOCKAGE À RAYONNAGES PRÉVU À CET EFFET

(30) Priorität: 29.01.2021 AT 500542021
(43) Veröffentlichungstag der Anmeldung: 06.12.2023
(73) Patentinhaber: TGW Logistics GmbH, 4614 Marchtrenk (AT)
(72) Erfinder: MESSNER, Gerhard, 4020 Linz (AT)
(74) Vertreter: Burger, Hannes
(86) Internationale Anmeldenummer: PCT/AT2022/060025
(87) Internationale Veröffentlichungsnummer: WO 2022/159999

(56) Entgegenhaltungen:
- EP-A1- 1 564 160
- EP-A1- 1 627 830
- EP-A1- 2 065 317
- EP-A2- 1 598 291
- WO-A1-2016/141395
- DE-A1- 102004 025 070
- DE-A1- 102004 046 176
- DE-U1- 20 011 661
- JP-A- 2005 138 955
- JP-A- 2013 170 079
- JP-A- H0 248 314
- JP-A- H07 309 406
- JP-A- S60 137 705
- US-B1- 9 818 002

## Beschreibung

Die Erfindung betrifft ein Verfahren zum Einlagern mehrerer Lagerobjekte unterschiedlicher Lagerobjekttype in ein Lagerregal, welches Regalsteher, übereinanderliegende Regalebenen und eine Vielzahl von Lagerbereichen umfasst. Die Lagerbereiche sind dabei jeweils zwischen zwei in Längsrichtung des Lagerregals beabstandeten Regalstehern angeordnet, und eine Einlagerung der Lagerobjekte wird von einem Lagerverwaltungssystem gesteuert, welchem ein elektronischer Speicher zugewiesen ist. Weiterhin betrifft die Erfindung ein Regallagersystem mit zumindest einem Lagerregal zur Aufnahme mehrerer Lagerobjekte unterschiedlicher Lagerobjekttype, welches Regalsteher, übereinanderliegende Regalebenen und eine Vielzahl von Lagerbereichen aufweist, wobei die Lagerbereiche jeweils zwischen zwei Regalstehern angeordnet sind. Zudem umfasst das Regallagersystem zumindest ein in einer Längsrichtung des Lagerregals verfahrbares Regalbediengerät zum Einlagern der Lagerobjekte, und ein Lagerverwaltungssystem, welchem ein elektronischer Speicher zugewiesen ist.

Ein solches Regallagersystem und ein Betriebsverfahren für ein solches Regallagersystem sind aus dem Stand der Technik bekannt.

Die JP 2013-170079 A offenbart ein Verfahren zum Einlagern mehrerer Lagerobjekte unterschiedlicher Lagerobjekttype in ein Lagerregal, welches Regalsteher, übereinanderliegende Regalebenen und eine Vielzahl von Lagerbereichen umfasst, wobei die Lagerbereiche jeweils zwischen zwei in einer Längsrichtung des Lagerregals beabstandeten Regalstehern angeordnet sind, wobei eine Einlagerung der Lagerobjekte von einem Lagerverwaltungssystem gesteuert wird, welchem ein elektronischer Speicher zugewiesen ist, und wobei das Verfahren folgende Schritte umfasst:
a) Zuordnen mehrerer Lagerbereichs-Segmentierungen zu einem Lagerbereich der Lagerbereiche im elektronischen Speicher für die Vielzahl von Lagerbereichen, wobei die Lagerbereichs-Segmentierungen jeweils eine Vielzahl von virtuellen Stellplätzen für die Lagerobjekte umfassen und eine mögliche Anordnung der Lagerobjekttypen innerhalb des genannten Lagerbereichs angeben,
b) Auswahl eines virtuellen Stellplatzes für die Lagerobjekttype des einzulagernden Lagerobjektes in der Vielzahl von Lagerbereichs-Segmentierungen durch das Lagerverwaltungssystem, wobei der virtuelle Stellplatz die Einlagerung der Lagerobjekttype des genannten Lagerobjektes ermöglicht,
c) Einlagern des Lagerobjektes auf einen physischen Stellplatz des Lagerbereiches, welcher dem ausgewählten virtuellen Stellplatz zugeordnet ist, durch ein in einer Längsrichtung des Lagerregals verfahrbares Regalbediengerät,
d) Ändern eines Status des virtuellen Stellplatzes im elektronischen Speicher, welcher angibt, ob der zugeordnete physische Stellplatz durch ein Lagerobjekt belegt ist, von unbelegt auf belegt,
e) Einschränken der virtuellen Stellplätze in den dem Lagerbereich zugeordneten Lagerbereichs-Segmentierungen auf virtuelle Stellplätze, welche die Einlagerung eines weiteren Lagerobjektes auf einen physischen Stellplatz ermöglichen, im elektronischen Speicher, und
f) Wiederholen der Schritte b) bis e).

Die JP 2013-170079 A offenbart ebenfalls ein Regallagersystem, umfassend zumindest ein Lagerregal zur Aufnahme mehrerer Lagerobjekte unterschiedlicher Lagerobjekttype, welches Regalsteher, übereinanderliegende Regalebenen und eine Vielzahl von Lagerbereichen aufweist, wobei die Lagerbereiche jeweils zwischen zwei in einer Längsrichtung des Lagerregals voneinander beabstandeten Regalstehern angeordnet sind, zumindest ein in der Längsrichtung des Lagerregals verfahrbares Regalbediengerät zum Einlagern der Lagerobjekte, und ein Lagerverwaltungssystem, welchem ein elektronischer Speicher zugewiesen ist, wobei das Lagerverwaltungssystem zur Durchführung folgender Schritte ausgebildet ist:
a) Zuordnen mehrerer Lagerbereichs-Segmentierungen zu einem Lagerbereich der Lagerbereiche im elektronischen Speicher für die Vielzahl von Lagerbereichen, wobei die Lagerbereichs-Segmentierungen jeweils eine Vielzahl von virtuellen Stellplätzen für die Lagerobjekte umfassen und eine mögliche Anordnung der Lagerobjekttypen innerhalb des genannten Lagerbereichs angeben,
b) Auswahl eines virtuellen Stellplatzes für die Lagerobjekttype des einzulagernden Lagerobjektes in der Vielzahl von Lagerbereichs-Segmentierungen, wobei der virtuelle Stellplatz die Einlagerung der Lagerobjekttype des genannten Lagerobjektes ermöglicht,
c) Ansteuern des Regalbediengeräts zwecks Einlagerung des Lagerobjektes auf einen physischen Stellplatz des Lagerbereiches, welcher dem ausgewählten virtuellen Stellplatz zugeordnet ist,
d) Ändern eines Status des virtuellen Stellplatzes im elektronischen Speicher, welcher angibt, ob der zugeordnete physische Stellplatz durch ein Lagerobjekt belegt ist, von unbelegt auf belegt,
e) Einschränken der virtuellen Stellplätze in den dem Lagerbereich zugeordneten Lagerbereichs-Segmentierungen auf virtuelle Stellplätze, welche die Einlagerung eines weiteren Lagerobjektes auf einen physischen Stellplatz ermöglichen, im elektronischen Speicher, und
f) Wiederholen der Schritte b) bis e).

Aus der US 2015/0266672 A1 ist ein Verfahren zum Lagern von Lagerobjekten bekannt, wobei jeweils eine Größe für eine Vielzahl von Lagerbereichen variabel angepasst wird. Jeder hierbei definierte variable Lagerbereich wird einem unterschiedlichen Lagerobjekt zugeordnet.

Ferner ist aus der EP 1 627 830 A1 ein Lagersystem zum Einlagern von Lagerobjekten bekannt, wobei eine Größe der Lagerobjekte erfasst wird. Hierbei wird in einem elektronischen Speicher Information über freie Plätze im Lagersystem hinterlegt. Darüber hinaus werden mehrere Lagerobjekte basierend auf deren Größe in Lagerobjektgruppen gruppiert und den Lagerobjektgruppen jeweils ein passender freier Platz zugeordnet.

Nachteilig an den bekannten Verfahren ist jedoch, dass sich die Einlagerung von Lagerobjekten unterschiedlicher Lagerobjekttype, insbesondere von Lagerobjekten unterschiedlicher Größe, insofern schwierig gestaltet als zukünftige Auswirkungen auf die Einlagerstrategie, die von der Einlagerung eines Lagerobjekts ausgelöst werden, nur schwer abgeschätzt werden können oder überhaupt nicht berücksichtigt werden. Dies führt bei der sukzessiven Befüllung eines Regallagersystems beziehungsweise eines oder mehrerer Lagerregale mitunter zu ungünstigen Situationen. Konkret kann es passieren, dass ein Lagerobjekt aufgrund einer ungünstigen Befüllung des Regallagersystems nicht mehr eingelagert werden kann, welches aber bei einer günstigen Befüllung des Regallagersystems beziehungsweise eines oder mehrerer Lagerregale bei gleichem Füllgrad eingelagert werden könnte.

Eine Aufgabe der Erfindung ist es nun, ein verbessertes Verfahren zum Einlagern mehrerer Lagerobjekte unterschiedlicher Lagerobjekttype in ein Lagerregal und ein verbessertes Regallagersystem hierfür anzugeben. Insbesondere soll ein Regallagersystem auf eine solche Weise befüllt werden, welche eine Einlagerung von weiteren Lagerobjekten begünstigt beziehungsweise erleichtert.

Die Aufgabe der Erfindung wird mit einem Verfahren der eingangs genannten Art gelöst, das folgende Schritte umfasst:
a) Zuordnen mehrerer Lagerbereichs-Segmentierungen zu einem Lagerbereich der Lagerbereiche im elektronischen Speicher des Lagerverwaltungssystems für die Vielzahl von Lagerbereichen, wobei die Lagerbereichs-Segmentierungen jeweils eine Vielzahl von virtuellen Stellplätzen für die Lagerobjekte umfassen und eine mögliche Anordnung der Lagerobjekttypen innerhalb des genannten Lagerbereichs angeben,
b) Erfassen der Lagerobjekttype eines einzulagernden Lagerobjektes,
c) Auswahl eines virtuellen Stellplatzes für das einzulagernde Lagerobjekt in der Vielzahl von Lagerbereichs-Segmentierungen durch das Lagerverwaltungssystem, wobei der virtuelle Stellplatz die Einlagerung der Lagerobjekttype des genannten Lagerobjektes ermöglicht, wobei der virtuelle Stellplatz nach dem Kriterium einer Priorisierung hinterer virtueller Stellplätze bei mehreren hintereinanderliegenden virtuellen Stellplätzen ausgewählt wird,
d) Einlagern des Lagerobjektes auf einen physischen Stellplatz des Lagerbereiches, welcher dem ausgewählten virtuellen Stellplatz zugeordnet ist, durch ein in einer Längsrichtung des Lagerregals verfahrbares Regalbediengerät,
e) Ändern eines Status des virtuellen Stellplatzes im elektronischen Speicher, welcher angibt, ob der zugeordnete physische Stellplatz durch ein Lagerobjekt belegt ist, von unbelegt (frei) auf belegt,
f) Einschränken der virtuellen Stellplätze in den dem Lagerbereich zugeordneten Lagerbereichs-Segmentierungen auf virtuelle Stellplätze, welche die Einlagerung eines weiteren Lagerobjektes auf einen physischen Stellplatz ermöglichen, im elektronischen Speicher, und
g) Wiederholen der Schritte b) bis f).

Die Aufgabe der Erfindung wird auch mit einem Regallagersystem der eingangs genannten Art gelöst, bei dem das Lagerverwaltungssystem zur Durchführung folgender Schritte ausgebildet ist:
a) Zuordnen mehrerer Lagerbereichs-Segmentierungen zu einem Lagerbereich der Lagerbereiche im elektronischen Speicher des Lagerverwaltungssystems für die Vielzahl von Lagerbereichen, wobei die Lagerbereichs-Segmentierungen jeweils eine Vielzahl von virtuellen Stellplätzen für die Lagerobjekte umfassen und eine mögliche Anordnung der Lagerobjekttypen innerhalb des genannten Lagerbereichs angeben,
b) Erfassen der Lagerobjekttype eines einzulagernden Lagerobjektes,
c) Auswahl eines virtuellen Stellplatzes für das einzulagernde Lagerobjekt in der Vielzahl von Lagerbereichs-Segmentierungen, wobei der virtuelle Stellplatz die Einlagerung der Lagerobjekttype des genannten Lagerobjektes ermöglicht, wobei der virtuelle Stellplatz nach dem Kriterium einer Priorisierung hinterer virtueller Stellplätze bei mehreren hintereinanderliegenden virtuellen Stellplätzen ausgewählt wird,
d) Ansteuern des Regalbediengeräts zwecks Einlagerung des Lagerobjektes auf einen physischen Stellplatz des Lagerbereiches, welcher dem ausgewählten virtuellen Stellplatz zugeordnet ist,
e) Ändern eines Status des virtuellen Stellplatzes im elektronischen Speicher, welcher angibt, ob der zugeordnete physische Stellplatz durch ein Lagerobjekt belegt ist, von unbelegt (frei) auf belegt,
f) Einschränken der virtuellen Stellplätze in den dem Lagerbereich zugeordneten Lagerbereichs-Segmentierungen auf virtuelle Stellplätze, welche die Einlagerung eines weiteren Lagerobjektes auf einen physischen Stellplatz ermöglichen, im elektronischen Speicher, und
g) Wiederholen der Schritte b) bis f).

Ein "physischer Stellplatz" ist definiert durch eine horizontale Stellfläche, welche in einer x-Richtung (parallel zur Längsrichtung des Lagerregals) und einer z-Richtung (senkrecht zur Längsrichtung des Lagerregals) zwischen den Regalstehern, insbesondere zwei vorderen Regalstehern und zwei hinteren Regalstehern, aufgespannt ist. Daher handelt es sich um einen zweidimensionalen Stellplatz.

Alternativ ist es aber auch möglich, dass ein "physischer Stellplatz" durch eine horizontale Stellfläche definiert ist, welche in einer x-Richtung (parallel zur Längsrichtung des Lagerregals) und einer z-Richtung (senkrecht zur Längsrichtung des Lagerregals) zwischen den Regalstehern, insbesondere zwei vorderen Regalstehern und zwei hinteren Regalstehern, aufgespannt ist, und eine in einer y-Richtung (vertikal zur Stellfläche) verlaufende Höhe. Daher handelt es sich um einen dreidimensionalen Stellplatz.

Ein "virtueller Stellplatz" ist die digitale Kopie beziehungsweise das digitale Abbild des jeweiligen physischen Stellplatzes.

Die vorgeschlagenen Maßnahmen erleichtern beziehungsweise begünstigen die Einlagerung von Lagerobjekten unterschiedlicher Lagerobjekttype, insbesondere von Lagerobjekten unterschiedlicher Größe, in ein gegebenenfalls bereits teilweise befülltes Regallagersystem beziehungsweise in ein oder mehrere bereits teilweise befüllte Lagerregale. Dies wird dadurch erreicht, dass bei einer Einlagerung eines Lagerobjekts ein günstiger virtueller Stellplatz in einer Lagerbereichs-Segmentierung gewählt wird, welche zukünftige Auswirkungen auf die Einlagerstrategie berücksichtigt. Dadurch kann das Regallagersystem beziehungsweise das eine oder die mehreren Lagerregale auch bei hohem Füllgrad so betrieben werden, dass stets eine Möglichkeit zur Einlagerung weiterer Lagerobjekte unterschiedlicher Lagerobjekttype gewährleistet ist.

Hierbei kann insbesondere vorgesehen sein, dass ein erstes Lagerobjekt gemäß einer ersten Lagerbereichs-Segmentierung auf einen ersten Stellplatz im Lagerbereich und in der Folge ein zweites Lagerobjekt gemäß einer zweiten Lagerbereichs-Segmentierung auf einen zweiten Stellplatz im selben Lagerbereich eingelagert wird. Durch die Kombination unterschiedlicher Lagerbereichs-Segmentierungen im selben Lagerbereich kann eine besonders effiziente Platzausnutzung im Lagerbereich erreicht werden.

Beim Einschränken der virtuellen Stellplätze im Schritt f) werden im Wesentlichen zumindest jene virtuellen Stellplätze in den verschiedenen Lagerbereichs-Segmentierungen als "belegt" gekennzeichnet, welche von der Einlagerung im Schritt d) betroffen sind, sodass diese in der Folge nicht mehr zugänglich sind, beispielsweise weil der korrespondierende physische Stellplatz im Lagerbereich zumindest teilweise belegt ist. Ebenso ist ein virtueller Stellplatz von der Einlagerung im Schritt d) betroffen, wenn das Lagerobjekt bei mehreren hintereinanderliegenden Stellplätzen auf einen vorderen Stellplatz eingelagert wird, da der oder die dahinterliegenden Stellplätze zwar nicht physisch belegt jedoch nicht mehr zugänglich sind. In diesem Fall kann der Status des oder der dahinterliegenden Stellplätze ebenfalls auf "belegt" geändert werden.

Es ist vorteilhaft, wenn virtuelle Stellplätze wieder freigegeben werden, wenn ein auszulagerndes Lagerobjekt von seinem physischen Stellplatz ausgelagert wird. Hierfür kann vorgesehen sein, dass bei einem Auslagervorgang des auszulagernden Lagerobjektes von seinem physischen Stellplatz der Status des dem physischen Stellplatz zugeordneten virtuellen Stellplatzes von belegt auf unbelegt geändert wird. Ferner ist hierbei vorzugsweise vorgesehen, dass das Einschränken der virtuellen Stellplätze, welches im Schritt f) bei einer vorangegangenen Einlagerung des auszulagernden Lagerobjektes erfolgt ist, rückgängig gemacht wird.

Die Lagerobjekttype gibt insbesondere die Größe eines Lagerobjekts in einer, zwei und/oder drei Dimensionen (Längenabmessung, gemessen in z-Richtung, Breitenabmessung, gemessen x-Richtung, und/oder Höhenabmessung, gemessen in y-Richtung) an. Ferner kann die Lagerobjekttype weitere Eigenschaften des Lagerobjekts umfassen, beispielsweise ob es sich direkt um eine Ware handelt oder um ein Ladehilfsmittel, mit welchem eine Ware transportiert wird, ob es sich um einen Schnelldreher oder Langsamdreher handelt, und so weiter. Ein Stellplatz, welcher die Einlagerung eines Lagerobjektes oder einer Lagerobjekttype ermöglicht, ist gleich groß wie das Lagerobjekt oder die Lagerobjekttype oder, insbesondere geringfügig, größer als das Lagerobjekt oder die Lagerobjekttype. Die Ware ist ein Einzelartikel oder eine mehrere Einzelartikel umfassende (und beispielweise durch eine Kunststofffolie umgebene) Verpackungseinheit. Das Ladehilfsmittel ist beispielsweise ein Behälter, ein Tablar, ein Karton usw.

Vorzugsweise umfasst das Regallagersystem eine Sensorik zum Lesen eines Datenträgers, beispielweise einen Barcode, und/oder eine Sensorik zur Erfassung der Lagerobjekttype, beispielweise Abmessungen des Lagerobjektes, und/oder eine Sensorik zur Objekterkennung der Lagerobjekttype, um darauf basierend ein Lagerobjekt zu ermitteln.

Die einem Lagerobjekt zugeordnete Lagerobjekttype ist beispielsweise in Stammdaten des Lagerobjekts hinterlegt.

Hierzu erweist es sich nach einer ersten Ausführung als günstig, wenn das Erfassen der Lagerobjekttype durch eine Identifikation des Lagerobjektes erfolgt. Die Identifikation des Lagerobjektes kann beispielsweise durch Auslesen eines Datenträgers durch eine Sensorik, insbesondere mittels eines Lesegerätes, erfolgen. Der Datenträger ist beispielsweise ein Barcode, ein Matrixcode, insbesondere ein QR-Code (Quick-Response-Code), ein Data-Matrix-Code, ein RFID-Tag (Radio Frequency Identification), oder dergleichen. Das Lesegerät kann ein optisches oder optoelektronisches Lesegerät sein, mit welchem die Daten maschinell gelesen werden können. Der Datenträger kann Daten enthalten, insbesondere eine Identifikationsnummer, anhand welcher auf die Stammdaten, in welchen die Lagerobjekttype des Lagerobjekts gespeichert ist, zurückgegriffen werden kann. Alternativ kann der Datenträger die Daten über die Lagerobjekttype auch direkt enthalten.

Hierzu erweist es sich nach einer zweiten Ausführung von Vorteil, wenn das Erfassen der Lagerobjekttype durch Erkennen des Lagerobjektes mit einer Sensorik zur Objekterkennung erfolgt. Die Objekterkennung beschreibt ein Verfahren zum Identifizieren eines Objektes mittels optischer, akustischer oder anderer physikalischer Erkennungsverfahren. Insbesondere kann nach einem Identifizieren des Lagerobjektes durch Objekterkennung auf die Stammdaten zurückgegriffen werden, in welchen die Lagerobjekttype des Lagerobjektes gespeichert ist.

Unabhängig von den beschriebenen Ausführungen kann das Erfassen der Lagerobjekttype alternativ ein Erfassen der Abmessungen des Lagerobjektes durch eine Sensorik umfassen, um insbesondere eine Länge, Breite und/oder Höhe beziehungsweise eine Größe in einer, zwei und/oder drei Dimensionen des Lagerobjektes zu erfassen. Die Sensorik umfasst insbesondere eine optische Sensorik. Die Lagerobjekttype des jeweiligen Lagerobjektes ergibt aus der erfassten Größe in einer, zwei und/oder drei Dimensionen des Lagerobjektes.

Weiterhin wird angemerkt, dass die Schritte d), e) und f) nicht zwingend in der angegebenen Reihenfolge ausgeführt werden müssen, sondern auch in anderer Abfolge ausgeführt werden können, beispielsweise in der Reihenfolge e) → d) → f) oder e) → f) → d) oder d) → f) → e).

Für das Verfahren kann ein automatisiertes, teilautomatisiertes oder manuell bedienbares Regalbediengerät vorgesehen sein.

Als Regalbediengeräte kommen generell sowohl schienengeführte Einebenenregalbediengeräte als auch schienengeführte Mehrebenenregalbediengeräte oder (nicht schienengeführte) autonome Regalbediengeräte, wie ein oder mehrere AMR (Autonomous Mobile Robot) oder ein oder mehrere AGV (Automated Guided Vehicle) jeweils mit einem Gelenkarmroboter und dgl. in Betracht. Darüber hinaus kommen als Regalbediengeräte auch durch eine Bedienperson verfahrbare Regalbediengeräte, wie beispielsweise Stapler oder dergleichen, in Betracht.

Vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn das Einschränken der virtuellen Stellplätze im Schritt f) ein Einschränken der dem Lagerbereich zugeordneten Lagerbereichs-Segmentierungen auf eine oder mehrere Lagerbereichs-Segmentierung(en), welche den gewählten virtuellen Stellplatz beinhalten, im elektronischen Speicher umfasst. Mit anderen Worten umfasst das Einschränken der virtuellen Stellplätze im Schritt f) ein Einschränken der dem Lagerbereich zugeordneten Lagerbereichs-Segmentierungen auf eine oder mehrere Lagerbereichs-Segmentierung(en) im elektronischen Speicher, wobei die verbleibenden Lagerbereichs-Segmentierung(en) den gewählten virtuellen Stellplatz beinhalten. Somit kann eine Anzahl an verfügbaren Lagerbereichs-Segmentierungen mit steigendem Füllgrad des jeweiligen Lagerbereiches reduziert werden, wodurch bei einem weiteren Einlagern eines weiteren Lagerobjektes die Auswahl eines virtuellen Stellplatzes besonders effizient erfolgen kann.

Vorteilhaft ist es, wenn der Schritt f) in gleicher Weise für weitere Lagerbereiche ausgeführt wird, insbesondere für benachbarte und/oder gegenüberliegende Lagerbereiche. Das heißt, die Lagerbereichs-Segmentierungen werden nicht nur für jenen Lagerbereich eingeschränkt, auf dem gerade ein Lagerobjekt eingelagert wurde, sondern auch für andere, auf denen aktuell gar kein Lagerobjekt eingelagert wurde. Auf diese Weise können zum Beispiel Stellplätze in einem benachbarten Lagerbereich freigehalten werden, welche die einfache Umlagerung von Lagerobjekten ermöglichen. Insbesondere betrifft die Ausführungsvariante in einer Regalgasse einander gegenüberliegende Lagerbereiche. Das heißt, Schritt f) kann in gleicher Weise für einen in der Regalgasse gegenüberliegenden Lagerbereich ausgeführt werden.

Darüber hinaus kann es vorteilhaft sein, wenn als Kriterium für die Auswahl eines virtuellen Stellplatzes im Schritt c) eine Maximalanzahl an virtuellen Stellplätzen vorgesehen wird, welche im Schritt f) nach dem Einschränken der virtuellen Stellplätze verbleibt. Dies führt zu hoher Lagerkapazität hinsichtlich der Anzahl weiterer einzulagernder Lagerobjekte. Das heißt, es können noch viele Lagerobjekte in den Lagerbereich eingelagert werden.

Vorteilhaft ist es weiterhin, wenn als Kriterium für die Auswahl eines virtuellen Stellplatzes im Schritt c) eine Maximalanzahl an Lagerbereichs-Segmentierungen vorgesehen wird, welche im Schritt f) nach dem Einschränken der dem Lagerbereich zugeordneten Lagerbereichs-Segmentierungen verbleibt. Dies führt zu hoher Flexibilität bei der Einlagerung weiterer Lagerobjekte, weil dann noch viele verschiedene Lagerbereichs-Segmentierungen zur Auswahl stehen.

Die Auswahl eines Stellplatzes erfolgt erfindungsgemäß unter Priorisierung hinterer (virtueller/physischer) Stellplätze bei mehreren hintereinanderliegenden (virtuellen/physischen) Stellplätzen. Darüber hinaus kann die Auswahl eines Stellplatzes in einer günstigen Variante des vorgeschlagenen Verfahrens nach einem oder mehreren der folgenden Kriterien erfolgen: Umschlaghäufigkeit des Lagerobjekts, gleichmäßige Belegung des Regallagersystems (daher des einen oder der mehreren Lagerregale) mit Lagerobjekten, Kumulierung von Lagerobjekten gleicher oder ähnlicher Lagerobjekttype, Füllgrad in einem als Ladehilfsmittel ausgebildeten Lagerobjekt, Füllgrad eines (physischen) Lagerbereichs, Trennung von Gefahrengut von ungefährlichen Lagerobjekten, Transportweg eines Lagerobjekts von einem Stellplatz zu einer Übergabevorrichtung, wobei das Lagerobjekt auf dem genannten Transportweg mit Hilfe des Regalbediengeräts transportiert wird, Transportweg eines Lagerobjekts von einer Übernahmevorrichtung zu einem Stellplatz, wobei das Lagerobjekt auf dem genannten Transportweg mit Hilfe des Regalbediengeräts transportiert wird, Priorisierung größerer vorderer (virtueller/physischer) Stellplätze bei mehreren hintereinanderliegenden (virtuellen/physischen) Stellplätzen, Minimierung der Einlagerzeit durch das Regalbediengerät, Maximierung der Anzahl der auf einmal durch das Regalbediengerät eingelagerten Lagerobjekte.

In den oben genannten Maßnahmen kann die Übernahmevorrichtung den Einlagervorgang und im Fall eines Einebenenregalbediengeräts beispielsweise eine Puffervorrichtung mit einer Vielzahl von Bereitstellvorrichtungen betreffen, wobei von jeder Bereitstellvorrichtung ein Regalbediengerät zumindest ein Lagerobjekt abholen kann. In den oben genannten Maßnahmen kann die Übergabevorrichtung den Auslagervorgang und im Fall eines Einebenenregalbediengeräts beispielsweise eine Puffervorrichtung mit einer Vielzahl von Bereitstellvorrichtungen betreffen, wobei an jede Bereitstellvorrichtung ein Regalbediengerät zumindest ein Lagerobjekt abgeben kann.

In den oben genannten Maßnahmen kann die Übernahmevorrichtung den Einlagervorgang und im Fall eines Mehrebenenregalbediengeräts beispielsweise eine Puffervorrichtung mit einer (einzigen) Bereitstellvorrichtung betreffen, wobei von dieser ein Regalbediengerät zumindest ein Lagerobjekt abholen kann, In den oben genannten Maßnahmen kann die Übergabevorrichtung den Auslagervorgang und im Fall eines Mehrebenenregalbediengeräts beispielsweise eine Puffervorrichtung mit einer (einzigen) Bereitstellvorrichtung betreffen, wobei an diese ein Regalbediengerät zumindest ein Lagerobjekt abgeben kann. Eine Einlager-Fördertechnik umfasst eine Fördervorrichtung zum Antransport von Förderobjekten, welche die Bereitstellvorrichtung ausbildet. Eine Auslager-Fördertechnik umfasst eine Fördervorrichtung zum Abtransport von Förderobjekten, welche die Bereitstellvorrichtung ausbildet.

Beispielsweise können Schnelldreher (A-Artikel) eher in der Nähe einer Vertikalfördervorrichtung zum Einlagern von Förderobjekten und/oder Auslagern von Förderobjekten eingelagert werden, wohingegen Langsamdreher (C-Artikel) eher weiter entfernt von der Vertikalfördervorrichtung zum Einlagern von Förderobjekten und/oder Auslagern von Förderobjekten eingelagert werden. Weiterhin können die hinteren Stellplätze eher mit Langsamdrehern (C-Artikeln) belegt werden, wenn ein Lagerbereich mehrere hintereinanderliegende Stellplätze aufweist beziehungsweise in einem Lagerregal (in z-Richtung) hintereinander mehrere Förderobjekte abgestellt werden, die vorderen eher mit Schnelldrehern (A-Artikeln). Wenn ein Lagerbereich mehrere hintereinanderliegende Stellplätze aufweist beziehungsweise in einem Lagerregal (in z-Richtung) hintereinander mehrere Förderobjekte abgestellt werden, können diese bevorzugt mit Lagerobjekten gleicher oder ähnlicher Lagerobjekttype belegt werden.

Vorteilhaft ist es darüber hinaus, wenn eines oder mehrere der oben genannten Kriterien bei einem Umlagervorgang berücksichtigt werden, bei welchem bereits eingelagerte Lagerobjekte auf einen anderen Stellplatz umgelagert werden, wobei die Schritte b) bis f) nach der Entnahme eines Lagerobjekts von seinem ursprünglichen Stellplatz beim Einlagern auf den anderen Stellplatz ausgeführt werden. Das heißt, beim Umlagern eines Lagerobjekts werden dieselben Maßnahmen ergriffen wie beim Einlagern eines Lagerobjekts. Das Umlagern umfasst somit ein Auslagern eines umzulagernden Lagerobjekts von seinem ursprünglichen Stellplatz und ein anschließendes Einlagern des umzulagernden Lagerobjekts auf den anderen Stellplatz. Das erstmalige Einlagern und das wiederholte Einlagern eines Lagerobjekts beim Umlagern folgt daher einem einheitlichen Prinzip, wodurch das vorgeschlagene Verfahren effizient genutzt wird. Beispielsweise kann ein solcher Umlagervorgang in Zeiten geringer Auslastung des Regallagersystems ausgeführt werden, etwa in der Nacht.

Ferner kann vorgesehen sein, dass der virtuelle oder physische Stellplatz beim Umlagern eines Lagerobjektes wegoptimiert ausgewählt wird, sodass ein Transportweg zwischen dem ursprünglichen Stellplatz des Lagerobjektes zu einem für das Umlagern gewählten Stellplatz möglichst kurz ist. Dies kann insbesondere dann vorteilhaft sein, wenn das Lagerobjekt lediglich kurzfristig am gewählten Stellplatz eingelagert werden soll.

Vorteilhaft werden die Schritte b) bis f) für mehrere Lagerobjekte auf einmal beziehungsweise gleichzeitig ausgeführt, wobei die Lagerobjekte im Schritt c) in einer oder mehreren Lagerbereichs-Segmentierung(en) und im Schritt d) in einem einzigen Lagerbereich eingelagert werden. Diese Variante ist dann von Vorteil, wenn vom Regalbediengerät mehr als ein Lagerobjekt in einem Schritt beziehungsweise in einem einzigen Einlagervorgang eingelagert werden kann. Hierbei kann vorgesehen sein, dass im Wesentlichen zeitgleich ein erstes Lagerobjekt gemäß einer ersten Lagerbereichs-Segmentierung auf einen ersten Stellplatz im Lagerbereich und ein zweites Lagerobjekt gemäß einer zweiten Lagerbereichs-Segmentierung auf einen zweiten Stellplatz im Lagerbereich eingelagert wird.

Günstig ist es dabei, wenn die Stellplätze der Lagerobjekte vom Regalbediengerät aus gesehen in einer Einlagerrichtung hintereinander angeordnet sind. Auf diese Weise kann das Regalbediengerät bei der Einlagerung ohne zwischenzeitlicher Fahrbewegung mehrerer Lagerobjekte auf einer Position in das Lagerregal abgeben.

Besonders vorteilhaft ist es weiterhin, wenn
mehrere Lagerbereichs-Segmentierungen zu einer Meta-Segmentierung zusammengefasst werden, wobei im Schritt c) zuerst ein virtueller Stellplatz in der Vielzahl von Meta-Segmentierungen ausgewählt wird und dann ein virtueller Stellplatz in der Vielzahl von Lagerbereichs-Segmentierungen der gewählten Meta-Segmentierung gewählt wird, und
im Schritt f) die dem Lagerbereich zugeordneten Meta-Segmentierungen im elektronischen Speicher auf eine oder mehrere Meta-Segmentierung(en) eingeschränkt werden, welche den gewählten virtuellen Stellplatz beinhalten.

Dadurch kann die Suche nach einer passenden Segmentierung beschleunigt werden. Wenn nämlich die Anzahl der einem Lagerbereich zugeordneten Lagerbereichs-Segmentierungen sehr groß wird, kann die Suche nach einem geeigneten virtuellen Stellplatz oder die Auswahl eines geeigneten virtuellen Stellplatzes für ein Lagerobjekt zeitintensiv sein. Daher ist es in so einem Fall von Vorteil, Meta-Segmentierungen, also Gruppen der Lagerbereichs-Segmentierungen zu bilden. Die Gruppen werden dabei beispielsweise nach dem Vorkommen bestimmter virtueller Stellplätze gebildet. Beispielsweise kann eine erste Meta-Segmentierung andere virtuelle Stellplätze beinhalten als eine zweite Meta-Segmentierung. Ist nun im Schritt c) ein für ein Lagerobjekt geeigneter virtueller Stellplatz zu wählen, so wird die Suche in den Meta-Segmentierungen begonnen. Demzufolge werden in einem ersten Schritt passende Meta-Segmentierungen ermittelt, die einen solchen virtuellen Stellplatz aufweisen. In weiterer Folge wird die Suche (nur) in den Lagerbereichs-Segmentierungen fortgesetzt, die in den ermittelten Meta-Segmentierungen enthalten sind. Demgemäß wird die Suche nach einem geeigneten virtuellen Stellplatz für ein Lagerobjekt verkürzt, da nicht die gesamte Anzahl an Lagerbereichs-Segmentierungen durchsucht werden muss. Die Meta-Segmentierungen können einander ausschließende Lagerbereichs-Segmentierungen aufweisen und/oder Überschneidungsbereiche bilden.

Von Vorteil ist es auch, wenn die einem Lagerbereich zugeordneten Lagerbereichs-Segmentierungen anhand eines Sortierkriteriums sortiert beziehungsweise priorisiert werden und im Schritt c) jene Lagerbereichs-Segmentierung ausgewählt wird, welche den gewählten virtuellen Stellplatz beinhaltet und die höchste Priorität aufweist. Durch die vorgeschlagenen Maßnahmen kann die Auswahl einer passenden Lagerbereichs-Segmentierung besonders effizient erfolgen. Als Sortierkriterium kann zum Beispiel die Anzahl der in einer Lagerbereichs-Segmentierung enthaltenen Stellplätze dienen, wobei die Priorität mit der Anzahl der Stellplätze ansteigt. Demzufolge werden nach Möglichkeit jene Lagerbereichs-Segmentierungen gewählt, bei denen nach der Belegung eines Stellplatzes durch das einzulagernde Lagerobjekt noch möglichst viele (virtuelle) Stellplätze frei bleiben. Insbesondere kann auch eines oder mehrere der weiter oben zu Anspruch 5 offenbarten Kriterien herangezogen werden.

Günstig ist es weiter, wenn im Schritt c) jener Stellplatz gewählt wird, welcher die beste Platzausnutzung durch das Lagerobjekt bietet. Ein Lagerobjekt ist regelmäßig kleiner als der physische Stellplatz, auf den es eingelagert wird. Vorteilhaft ist es nun, wenn der nicht durch das Lagerobjekt belegte Platz möglichst klein ist. Der Begriff "Platzausnutzung" kann sich dabei entweder auf die Ausnutzung einer eindimensionalen Breite, einer eindimensionalen Tiefe, einer eindimensionalen Höhe, einer zweidimensionalen Stellfläche oder eines dreidimensionalen Raumes beziehen.

Schließlich kann es günstig sein, wenn bei dem Regalsystem, das Einschränken der virtuellen Stellplätze im Schritt f) ein Einschränken der dem Lagerbereich zugeordneten Lagerbereichs-Segmentierungen auf eine oder mehrere Lagerbereichs-Segmentierung(en), welche den gewählten virtuellen Stellplatz beinhalten, im elektronischen Speicher umfasst.

Generell wird angemerkt, dass die Lagerobjekte gegebenenfalls auch übereinandergestapelt werden können. Im Falle zweidimensionaler virtueller Stellplätze erstreckt sich die Begrenzung derselben in die Höhe, die Segmentierung dreidimensionaler virtueller Stellplätze kann in unterschiedlichen Ebenen dagegen auch verschieden aussehen.

Generell wird auch angemerkt, dass die Verwendung rechteckförmiger beziehungsweise quaderförmiger virtueller Stellplätze und physischer Stellplätze in den meisten Anwendungsfällen von Vorteil ist, die virtuellen Stellplätze und physischen Stellplätze hinsichtlich ihrer Formgebung aber beliebig ausgeführt sein können. Vorzugsweise entspricht eine Form der virtuellen Stellplätze einer Grundfläche beziehungsweise Form der einzulagernden Lagerobjekte. Häufig sind Lagerobjekte, beispielsweise Kisten, Trays, Kartons und dergleichen, rechteckig geformt. In speziellen Anwendungsfällen, beispielsweise im Falle von runden beziehungsweise kreisförmigen Lagerobjekten, kann die Verwendung kreisförmiger beziehungsweise zylinderförmiger virtueller Stellplätze und physischer Stellplätze vorteilhaft sein.

Darüber hinaus können auch eindimensionale virtuelle Stellplätze und/oder physische Stellplätze vorgesehen sein, wobei die eindimensionalen Stellplätze im Wesentlichen eine Breite (in x-Richtung) oder eine Länge (in z-Richtung) angeben, welche das Einlagern eines Lagerobjektes ermöglicht.

An dieser Stelle wird auch angemerkt, dass sich die zum vorgestellten Verfahren offenbarten Varianten und Vorteile gleichermaßen auf das vorgestellte Regallagersystem beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: einen kleineren Ausschnitt aus einem Regallagersystem mit schematisch dargestellten Lagerregalen in Schrägansicht;
- Fig. 2: einen größeren Ausschnitt aus dem Regallagersystems nach Fig. 1 in Draufsicht auf eine Regalebene;
- Fig. 3: die Zuordnung mehrerer Lagerbereichs-Segmentierungen zu einem Lagerbereich;
- Fig. 4-9b: einen beispielhaften Ablauf bei der Einlagerung von zwei Lagerobjekten in einen Lagerbereich;
- Fig. 10: eine simultane und gleichartige Einschränkung von Lagerbereichs-Segmentierungen für mehrere Lagerbereiche;
- Fig. 11: eine gleichzeitige Einlagerung von zwei Lagerobjekten auf hintereinanderliegende Stellplätze;
- Fig. 12: eine Verwendung von Meta-Segmentierungen bei der Auswahl eines virtuellen Stellplatzes; und
- Fig. 13: ein Beispiel für eine Lagerbereichs-Segmentierung für runde Stellplätze.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

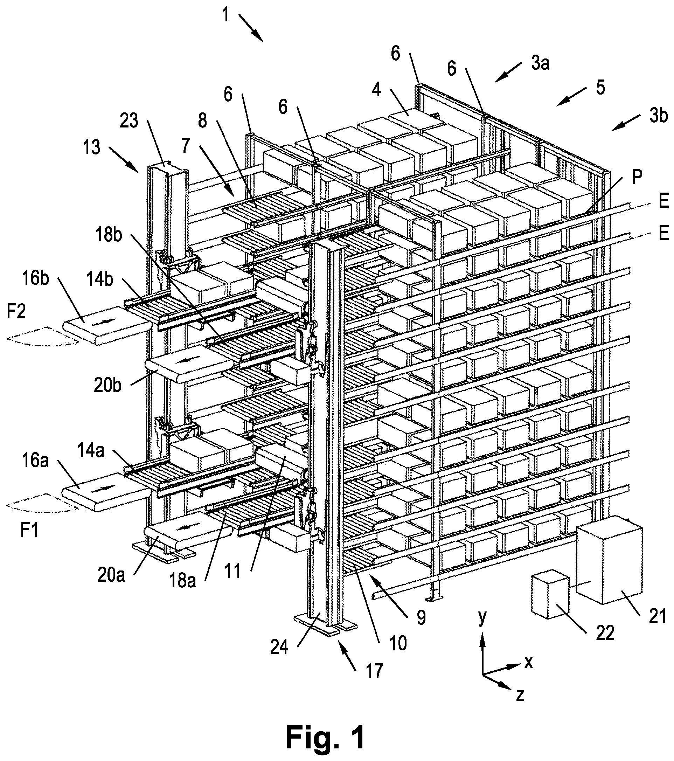

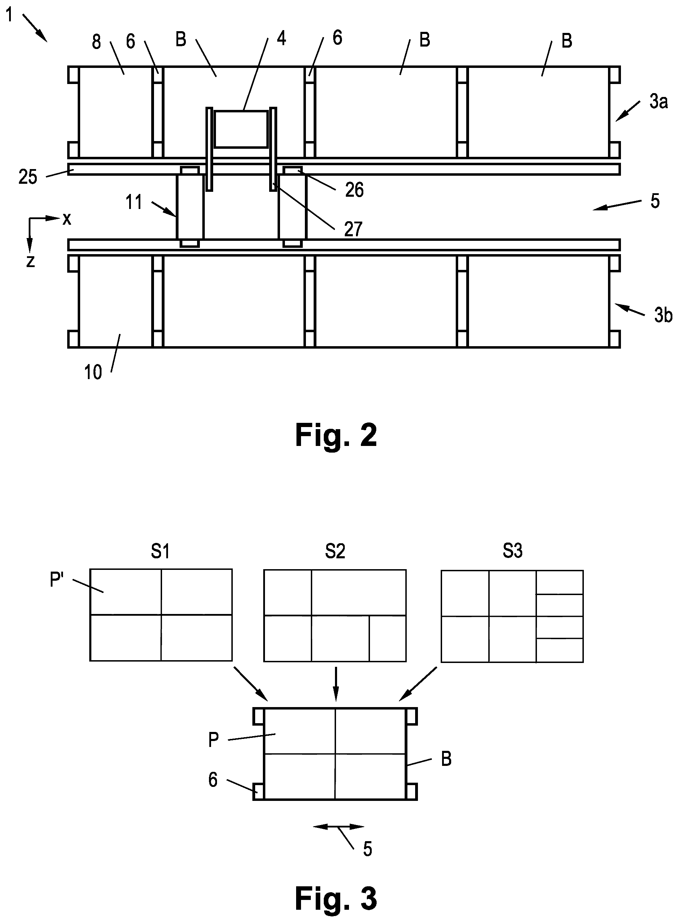

Fig. 1 zeigt ein Beispiel eines automatisiert betriebenen Regallagersystems 1 in Schrägansicht. Das Regallagersystem 1 umfasst nach gezeigter Ausführung ein erstes Lagerregal 3a zur Aufnahme mehrerer Lagerobjekte 4 unterschiedlicher Lagerobjekttype, ein zweites Lagerregal 3b zur Aufnahme mehrerer Lagerobjekte 4 unterschiedlicher Lagerobjekttype und eine Regalgasse 5 zwischen dem ersten Lagerregal 3a und dem zweiten Lagerregal 3b. Die Lagerregale 3a, 3b umfassen jeweils vertikale Regalsteher 6, mehrere übereinanderliegende Regalebenen E und in den Regalebenen E angeordnete Lagerbereiche B, wobei die Lagerbereiche B jeweils zwischen zwei Regalstehern 6 angeordnet sind. Die vertikalen Regalsteher 6 können vordere Regalsteher und hintere Regalsteher umfassen. Generell kann eine Regalebene E durch in z-Richtung verlaufende Querträger beziehungsweise Tiefenauflagen oder einen Fachboden oder einen Gitterfachboden ausgebildet sein. In Fig. 1 ist aus Gründen der besseren Übersicht lediglich ein Lagerbereich B je Regalebene E dargestellt. Üblicherweise sind aber eine Vielzahl von Lagerbereichen B je Regalebene E vorhanden, so wie dies auch in der Fig. 2 schematisch eingetragen ist. Die Lagerbereiche B umfassen jeweils mehrere physische Stellplätze P für die Aufnahme der Lagerobjekte 4. Das Regallagersystem 1 umfasst nach dieser Ausführung weiterhin eine Einlager-Puffervorrichtung 7 mit Einlager-Bereitstellvorrichtungen 8, welche in übereinanderliegenden Bereitstellebenen angeordnet und jeweils für das Zwischenpuffern eines Lagerobjekts 4 oder mehrerer Lagerobjekte 4 ausgebildet sind. In diesem Beispiel ist je eine Bereitstellebene je einer Regalebene E zugeordnet und daher nicht gesondert bezeichnet. Alternativ ist jedoch eine andere Zuordnung möglich. Die Bereitstellvorrichtungen 10 können eine angetriebene Fördervorrichtung, beispielsweise einen Rollenförderer, umfassen.

Das Regallagersystem 1 umfasst nach dieser Ausführung darüber hinaus eine Auslager-Puffervorrichtung 9 mit Auslager-Bereitstellvorrichtungen 10, welche in übereinanderliegenden Bereitstellebenen angeordnet und jeweils für das Zwischenpuffern eines Lagerobjekts 4 oder mehrerer Lagerobjekte 4 ausgebildet sind. In diesem Beispiel ist je eine Bereitstellebene je einer Regalebene E zugeordnet und daher nicht gesondert bezeichnet. Alternativ ist jedoch auch hier eine andere Zuordnung möglich. Die Bereitstellvorrichtungen 10 können eine angetriebene Fördervorrichtung, beispielsweise einen Rollenförderer, umfassen.

Das Regallagersystem 1 umfasst nach dieser Ausführung mehrere Regalbediengeräte 11, welche in der Regalgasse 5 zwischen dem ersten Lagerregal 3a und dem zweiten Lagerregal 3b bewegt werden. Konkret sind die Regalbediengeräte 11 vor den Lagerbereichen B, vor den Einlager-Bereitstellvorrichtungen 8 und vor den Auslager-Bereitstellvorrichtungen 10 jeweils auf einer horizontalen Fahrebene in einer Längsrichtung x verfahrbar. Die Längsrichtung verläuft parallel zur Längserstreckung der Regalgasse 5. Hierzu können je horizontaler Fahrebene paarweise angeordnete Fahrschienen 25 vorgesehen werden. Je Fahrebene ist eine erste Fahrschiene 25 (siehe Fig. 2) bevorzugt an den vertikalen (vorderen) Regalstehern 6 des ersten Lagerregals 3a und eine zweite Fahrschiene 25 bevorzugt an den vertikalen (vorderen) Regalstehern 6 des zweiten Lagerregals 3b befestigt. Die Fahrschienen 25 erstrecken sich entlang der Lagerbereiche B und entlang der Bereitstellvorrichtungen 8, 10 zur Einlagerung von Lagerobjekten 4 und Auslagerung von Lagerobjekten 4.

Die Regalbediengeräte 11 weisen jeweils eine Lastaufnahmevorrichtung zum Einlagern und Auslagern von Lagerobjekten 4 auf (siehe auch Fig. 2) und sind zum Transport der Lagerobjekte 4 von den Einlager-Bereitstellvorrichtungen 8 zu den Lagerbereichen B und zum Transport der Lagerobjekte 4 von den Lagerbereichen B zu den Auslager-Bereitstellvorrichtungen 10 ausgebildet. Mit anderen Worten erfolgt die fördertechnische Verbindung der Einlager-Bereitstellvorrichtungen 8 mit den Lagerbereichen B und die fördertechnische Verbindung der Lagerbereiche B mit den Auslager-Bereitstellvorrichtungen 10 über die Regalbediengeräte 11.

Die WO 2016/168878 A1 beschreibt eine mögliche Ausführung für ein solches Regalbediengerät 11 (Einebenenregalbediengerät) und verschiedene Ausführungen einer Lastaufnahmevorrichtung zum Einlagern und Auslagern von Lagerobjekten 4.

In diesem Beispiel ist je eine Fahrebene je einer Regalebene E zugeordnet und daher nicht gesondert bezeichnet.

Nach gezeigter Ausführung ist jeder Regalebene E je ein Regalbediengerät 11 zugeordnet. Alternativ können aber auch weniger Regalbediengeräte 11 als Regalebenen E vorhanden sein. In diesem Fall können die Regalbediengeräte 11 durch einen beispielweise in der AT 522 434 A1 beschriebenen Regalbediengeräte-Heber von einer Fahrebene auf eine andere Fahrebene bewegt werden.

Weiterhin umfasst das Regallagersystem 1 nach dieser Ausführung eine der Regalgasse 5 zugeordnete Einlager-Vertikalfördervorrichtung 13 mit mehreren unabhängig voneinander ansteuerbaren und relativ gegenüber den Bereitstellebenen verstellbaren Einlager-Transportplattformen 14a, 14b und eine der Regalgasse 5 zugeordnete und an die Einlager-Vertikalfördervorrichtung 13 fördertechnisch angeschlossene Einlager-Fördertechnik zum Antransport von Lagerobjekten 4 zu der Einlager-Vertikalfördervorrichtung 13. Die Lagerobjekte 4 sind dabei mittels der Einlager-Transportplattformen 14a, 14b von der Einlager-Fördertechnik zu den Einlager-Bereitstellvorrichtungen 8 transportierbar. Die Lagerobjekte 4 sind mit Hilfe der Einlager-Transportplattformen 14a, 14b nicht nur vertikal, sondern auch horizontal bewegbar. Zu diesem Zweck weisen die Einlager-Transportplattformen 14a, 14b jeweils eine Transportvorrichtung auf, in diesem Beispiel Rollenförderer. Denkbar wäre aber auch, dass die Einlager-Vertikalfördervorrichtung 13 nur eine Einlager-Transportplattform 14a oder auch mehr als zwei Einlager-Transportplattformen 14a, 14b aufweist.

Sind mehrere Einlager-Transportplattformen 14a, 14b vorgesehen, sind diese an einer Einlager-Führungsanordnung der Einlager-Vertikalfördervorrichtung 13 vertikal übereinander angeordnet und können durch eine elektronische Steuerung unabhängig voneinander verstellt werden. Die Einlager-Führungsanordnung für die Einlager-Transportplattformen 14a, 14b kann an einem ortsfest aufgestellten Einlager-Vertikalmast 23 ausgebildet sein, insbesondere an einem einzigen Einlager-Vertikalmast 23, so wie das in der Fig. 1 der Fall ist.

In diesem Beispiel umfasst die Einlager-Fördertechnik eine erste Einlager-Fördervorrichtung 16a in einer ersten Förderebene F1 und eine zweite Einlager-Fördervorrichtung 16b in einer zweiten Förderebene F2. Denkbar wäre aber auch, dass die Einlager-Fördertechnik nur eine Einlager-Fördervorrichtung 16a aufweist.

Weiterhin umfasst das Regallagersystem 1 nach dieser Ausführung eine der Regalgasse 5 zugeordnete Auslager-Vertikalfördervorrichtung 17 mit mehreren unabhängig voneinander ansteuerbaren und relativ gegenüber den Bereitstellebenen verstellbaren Auslager-Transportplattformen 18a, 18b und eine der Regalgasse 5 zugeordnete und an die Auslager-Vertikalfördervorrichtung 17 fördertechnisch angeschlossene Auslager-Fördertechnik zum Abtransport von Lagerobjekten 4 von der Auslager-Vertikalfördervorrichtung 17, wobei die Lagerobjekte 4 mittels der Auslager-Transportplattformen 18a, 18b von den Auslager-Bereitstellvorrichtungen 10 zu der Auslager-Fördertechnik 19 transportierbar sind. Die Lagerobjekte 4 sind mit Hilfe der Auslager-Transportplattformen 18a, 18b nicht nur vertikal, sondern auch horizontal bewegbar. Zu diesem Zweck weisen die Auslager-Transportplattformen 18a, 18b jeweils eine Transportvorrichtung auf, in diesem Beispiel Rollenförderer. Denkbar wäre aber auch, dass die Auslager-Vertikalfördervorrichtung 17 nur eine Auslager-Transportplattform 18a oder auch mehr als zwei Einlager-Transportplattformen 18a, 18b aufweist.

Sind mehrere Auslager-Transportplattformen 18a, 18b vorgesehen, sind diese an einer Auslager-Führungsanordnung der Auslager-Vertikalfördervorrichtung 17 vertikal übereinander angeordnet und können durch eine elektronische Steuerung unabhängig voneinander verstellt werden. Die Auslager-Führungsanordnung für die Auslager-Transportplattformen 18a, 18b kann an einem ortsfest aufgestellten Auslager-Vertikalmast 24 ausgebildet sein, insbesondere an einem einzigen Auslager-Vertikalmast 24, so wie das in der Fig. 1 der Fall ist.

In diesem Beispiel umfasst die Auslager-Fördertechnik 19 eine erste Auslager-Fördervorrichtung 20a in der ersten Förderebene F1 und eine zweite Auslager-Fördervorrichtung 20b in der zweiten Förderebene F2. Denkbar wäre aber auch, dass die Auslager-Fördertechnik 19 nur eine Auslager-Fördervorrichtung 20a aufweist.

In dem gezeigten Beispiel ist die Einlager-Puffervorrichtung 7 zwischen dem ersten Lagerregal 3a und der Einlager-Vertikalfördervorrichtung 13 angeordnet und die Auslager-Puffervorrichtung 9 zwischen dem zweiten Lagerregal 3b und der Auslager-Vertikalfördervorrichtung 17. Grundsätzlich ist aber auch eine andere Anordnung denkbar, insbesondere kann die Einlagerseite an einer Stirnseite der Regalgasse 5 angeordnet sein und die Auslagerseite an einer anderen Stirnseite der Regalgasse 5.

Im Hinblick auf die Ausführung der Einlager-Vertikalfördervorrichtung 13 und Auslager-Vertikalfördervorrichtung 17 wird auf die WO 2020/113249 A1 und WO 2020/113254 A1 hingewiesen.

Schließlich umfasst das Regallagersystem 1 ein Rechnersystem, insbesondere einen oder mehrere Computer, beispielweise einen Steuerungsrechner (einer speicherprogrammierbaren Steuerung) und/oder einen Materialflussrechner und/oder einen Lagerverwaltungsrechner. Die Einlager-Fördertechnik, die Auslager-Fördertechnik, die Einlager-Vertikalfördervorrichtung 13, die Auslager-Vertikalfördervorrichtung 17, und das oder die Regalbediengeräte 11 werden von einem Steuerungssystem bzw. dem Rechnersystem angesteuert.

Ein Lagerverwaltungssystem 21 beziehungsweise der Lagerverwaltungsrechner (Warehouse Management System) ist in der Fig. 1 symbolisch dargestellt. Dem Lagerverwaltungssystem 21 ist ein in Fig. 1 symbolisch dargestellter elektronischer Speicher 22 zugeordnet. Insbesondere kann das Lagerverwaltungssystem 21 den Speicher 22 umfassen oder mit einem Speicher 22 verbunden sein.

Während nach obiger Ausführung eine erste Vertikalfördervorrichtung 13 der Einlagerung von Lagerobjekten 4 und eine zweiten Vertikalfördervorrichtung 17 der Auslagerung von Lagerobjekten 4 vorgesehen sind, kann nach einer nicht gezeigten Ausführung eine Vertikalfördervorrichtung vorgesehen sein, welche sowohl der Einlagerung von Lagerobjekten 4 als auch der Auslagerung von Lagerobjekten 4 dient. Die genannte Vertikalfördervorrichtung kann, wie oben beschrieben, eine oder mehrere Transportplattformen umfassen, welche der Einlagerung von Lagerobjekten 4 als auch der Auslagerung von Lagerobjekten 4 dienen.

Dabei kann nach einer ersten Ausführung die Puffervorrichtung an einer der Seiten der Vertikalfördervorrichtung und in übereinanderliegenden Bereitstellebenen die Bereitstellvorrichtungen jeweils für das Zwischenpuffern eines Lagerobjekts 4 oder mehrerer Lagerobjekte 4 umfassen. Die Bereitstellvorrichtungen sind zwischen der Vertikalfördervorrichtung und dem ersten Lagerregal 3a oder zweiten Lagerregal 3b angeordnet. Einige der Bereitstellvorrichtungen dienen der Einlagerung von Lagerobjekten 4, und einige der Bereitstellvorrichtungen dienen der Auslagerung von Lagerobjekten 4, oder die Bereitstellvorrichtungen können in einem Reversierbetrieb jeweils und je nach Bedarf der Einlagerung von Lagerobjekten 4 oder der Auslagerung Einlagerung von Lagerobjekten 4 dienen.

Dabei kann nach einer zweiten Ausführung die Puffervorrichtung zu beiden Seiten der Vertikalfördervorrichtung und in übereinanderliegenden Bereitstellebenen die Bereitstellvorrichtungen jeweils für das Zwischenpuffern eines Lagerobjekts 4 oder mehrerer Lagerobjekte 4 umfassen.

Die Bereitstellvorrichtungen, welche benachbart an der ersten Seite der Vertikalfördervorrichtung angeordnet sind, dienen dann ausschließlich der Einlagerung von Lagerobjekten 4, und die Bereitstellvorrichtungen, welche benachbart an der zweiten Seite der Vertikalfördervorrichtung angeordnet sind, dienen dann ausschließlich der Auslagerung von Lagerobjekten 4.

Dabei kann auch die Fördertechnik eine Fördervorrichtung zum Antransport von Lagerobjekten 4 zu der Vertikalfördervorrichtung und eine Fördervorrichtung zum Abtransport von Lagerobjekten 4 von der Vertikalfördervorrichtung umfassen.

Unterschiedlichste Ausführungen von Regallagersystem sind beispielweise in der WO 2013/090970 A2 und WO 2016/033628 A1 beschrieben. Es versteht sich, dass diese Regallagersysteme lediglich Beispiele zeigen, keineswegs aber der Erfindungsgegenstand hierauf eingeschränkt ist.

Es sei auch darauf hingewiesen, dass ein Regallagersystem zusätzliche Lagerregale und Regalgassen aufweisen kann, beispielsweise zehn Lagerregale und fünf Regalgassen, welche jeweils gemäß der obigen Beschreibung ausgeführt sind.

Demnach kann das beschriebene Regallagersystem in den oben verschiedenen Ausführungen umfassen
ein erstes Lagerregal 3a mit Regalstehern 6, übereinanderliegenden Regalebenen E und einer Vielzahl von Lagerbereichen B, wobei zumindest einige der Lagerbereiche B eine Vielzahl von physischen Stellplätzen P umfassen,
ein zweites Lagerregal 3b mit Regalstehern 6, übereinanderliegenden Regalebenen E und einer Vielzahl von Lagerbereichen B, wobei zumindest einige der Lagerbereiche B eine Vielzahl von physischen Stellplätzen P umfassen,
eine Regalgasse 5 zwischen dem ersten Lagerregal 3a und dem zweiten Lagerregal 3b,
eine Puffervorrichtung 7, 9 mit Bereitstellvorrichtungen 8, 10 jeweils für das Zwischenpuffern eines Lagerobjektes 4 oder mehrerer Lagerobjekte 4, wovon erste Bereitstellvorrichtungen 8 der Einlagerung von Lagerobjekten 4 und zweite Bereitstellvorrichtungen 10 der Auslagerung von Lagerobjekten 4 dienen,
eine oder mehrere Vertikalfördervorrichtungen 13, 17 zur Einlagerung von Lagerobjekten 4 und Auslagerung von Lagerobjekten 4, welche eine oder mehreren Vertikalfördervorrichtungen 13, 17 jeweils mit zumindest einer relativ gegenüber den Bereitstellvorrichtungen 8, 10 verstellbaren Transportplattform 14a ausgestattet sind, die eine Transportvorrichtung zur Einlagerung von Lagerobjekten 4 und/oder Auslagerung von Lagerobjekten 4 umfassen,
eine an eine oder mehreren Vertikalfördervorrichtungen anschließende Fördertechnik mit einer ersten Fördervorrichtung zum Antransport (Einlagerung) von Lagerobjekten 4 und einer zweiten Fördervorrichtung zum Abtransport (Auslagerung) von Lagerobjekten 4,
ein oder mehrere Regalbediengeräte 11, welche in der Regalgasse 5 vor den Lagerbereichen B, vor den Bereitstellvorrichtungen 8, 10 jeweils auf einer horizontalen Fahrbahn verfahrbar sind, welche oder welches zum Transport der Lagerobjekte 4 von den Bereitstellvorrichtungen 8, welche der Einlagerung von Lagerobjekten 4 dienen, zu den Lagerbereichen B und zum Transport der Lagerobjekte 4 von den Lagerbereichen B zu den Bereitstellvorrichtungen 10, welche der Auslagerung von Lagerobjekten 4 dienen, ausgebildet sind, und
ein Lagerverwaltungssystem 21, welches zur Durchführung nachfolgend beschriebener Schritte ausgebildet ist.

Fig. 2 zeigt eine schematische Darstellung des Regallagersystems 1 nach Fig. 1, jedoch mit mehreren Lagerbereichen B in x-Richtung und in Draufsicht auf eine Regalebenen E. Die Einlager-Vertikalfördervorrichtung 13, die Auslager-Vertikalfördervorrichtung 17 und die Fördertechnik zum Antransport von Lagerobjekten 4 und Abtransport von Lagerobjekten 4 sind aus Gründen der besseren Übersicht nicht dargestellt. Das Regallagersystem 1 umfasst die oben beschriebenen Lagerregale 3a, 3b und die dazwischenliegende Regalgasse 5, in der das Regalbediengerät 11 in einer Längsrichtung x verfahrbar angeordnet ist. Konkret sind je Fahrebene die Fahrschienen 25 vorgesehen, auf denen Räder 26 des Regalbediengeräts 11 abrollen können. Zudem weist das Regalbediengerät 11 eine beidseitig teleskopartig ausfahrbare Lastaufnahmevorrichtung 27 auf, mit der Lagerobjekte 4 in die Lagerregale 3a, 3b eingelagert und aus den Lagerregalen 3a, 3b ausgelagert werden können. Mit anderen Worten können Lagerobjekte 4 mit Hilfe der Lastaufnahmevorrichtung 27 auf physische Stellplätze P im Lagerbereich B abgelegt oder von diesem entnommen werden. Darüber hinaus können Lagerobjekte 4 mit der Lastaufnahmevorrichtung 27 auf dem Regalbediengerät 11 auch in der Längsrichtung x transportiert werden, wenn die Lastaufnahmevorrichtung 27 eingefahren ist.

Anhand der Fig. 3 bis 9 soll nun die Betriebsweise des automatisiert betriebenen Regallagersystems 1 näher erläutert werden.

Fig. 3 zeigt mehrere unterschiedliche, einem Lagerbereich B zugeordnete, Lagerbereichs-Segmentierungen S1..S3, welche jeweils eine Vielzahl von virtuellen Stellplätzen P' für die Lagerobjekte 4 umfassen und eine mögliche Anordnung der Lagerobjekttypen innerhalb des genannten Lagerbereichs B angeben. Konkret erfolgt die genannte Zuordnung in einem ersten Schritt a) im elektronischen Speicher 22 des Lagerverwaltungssystems 21. Nach diesem Beispiel unterscheiden sich die Lagerbereichs-Segmentierungen S 1..S3 jeweils voneinander, unter anderem im Hinblick auf die Größe und/oder die Anordnung und/oder die Anzahl der virtuellen Stellplätze P'. Eine Lagerbereichs-Segmentierung S 1..S3 kann mehrere virtuelle Stellplätzen P' umfassen, welche virtuellen Stellplätze P' im Hinblick auf die Größe eine gleiche oder unterschiedliche Dimension ausbilden. In Fig. 3 umfasst die Lagerbereichs-Segmentierung S1 gleich große virtuelle Stellplätze P', während die Lagerbereichs-Segmentierung S2 oder die Lagerbereichs-Segmentierung S3 verschieden große virtuelle Stellplätze P' aufweisen.

Die Anzahl der einem Lagerbereich B zugeordneten Lagerbereichs-Segmentierungen S1..S3 ist an sich beliebig und kann die Zahl drei natürlich auch übersteigen.

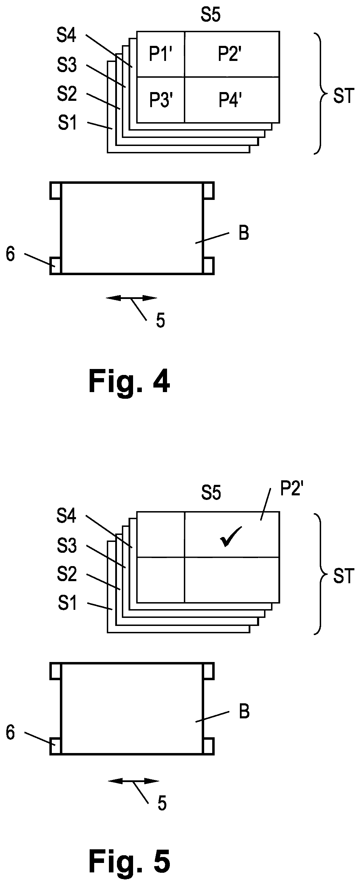

Fig. 4 zeigt einen Stapel ST von mehreren einem Lagerbereich B zugeordneten Lagerbereichs-Segmentierungen S 1..S5, von denen lediglich die Lagerbereichs-Segmentierung S5 im Detail sichtbar ist. Die Lagerbereichs-Segmentierung S5 umfasst in diesem Beispiel vier virtuelle Stellplätze P1'..P4' für die Lagerobjekte 4 und gibt eine mögliche Anordnung der Lagerobjekttypen innerhalb des genannten Lagerbereichs B an. Die Lagerbereichs-Segmentierungen S1..S5 unterscheiden sich jeweils voneinander, unter anderem im Hinblick auf die Größe und/oder die Anordnung und/oder die Anzahl der virtuellen Stellplätze P1'..P4'. Eine Lagerbereichs-Segmentierung S 1..S5 kann mehrere virtuelle Stellplätzen P' umfassen, welche virtuellen Stellplätze P' im Hinblick auf die Größe eine gleiche oder unterschiedliche Dimension ausbildet. In Fig. 4 umfasst beispielweise die Lagerbereichs-Segmentierung S5 verschieden große virtuelle Stellplätze P'.

Ein Stapel ST von Lagerbereichs-Segmentierungen S1..S5 bedeutet im Wesentlichen, dass eine Vielzahl von Lagerbereichs-Segmentierungen S 1..S5 demselben Lagerbereich B zugeordnet ist. Aus dem Stapel ST sind vorzugsweise sämtliche Lagerbereichs-Segmentierungen S1..S5 bzw. eine beliebige Lagerbereichs-Segmentierung S1..S5 auswählbar. Aus dem Begriff Stapel ST alleine ergibt sich somit nicht zwingenderweise ein Last-In-First-Out-Prinzip, gemäß welchem bloß eine oberste Lagerbereichs-Segmentierung auswählbar wäre. Dies trifft auf sämtliche beschriebenen Ausführungsformen zu.

In einem Schritt b) wird nun die Lagerobjekttype eines einzulagernden Lagerobjektes 4a erfasst, insbesondere durch eine Sensorik zum Lesen eines Datenträgers, beispielweise einen Barcode (nicht dargestellt) oder eine Sensorik zur optischen Erfassung der Lagerobjekttype, beispielweise Abmessungen des Lagerobjektes 4, oder eine Sensorik zur Objekterkennung der Lagerobjekttype, um ein Lagerobjekt 4 ermitteln.

Die einem Lagerobjekt 4 zugeordnete Lagerobjekttype ist beispielsweise in Stammdaten des Lagerobjekts 4 hinterlegt. Die Daten umfassen die Lagerobjekttype, beispielsweise eine Länge, Breite und/oder Höhe eines Lagerobjektes 4. Diesbezüglich wird auf die obige Offenbarung verwiesen.

Alternativ kann das Erfassen der Lagerobjekttype unmittelbar das Ermitteln der Lagerobjekttype umfassen, insbesondere das Ermitteln einer Länge, Breite und/oder Höhe eines Lagerobjektes 4 durch die Sensorik.

In einem darauf folgenden Schritt c) wird ein virtueller Stellplatz P1'..P4' für das einzulagernde Lagerobjekt 4a in der Vielzahl von Lagerbereichs-Segmentierungen S1..S5 durch das Lagerverwaltungssystem 21 ausgewählt, wobei der gewählte virtuelle Stellplatz P1'..P4' die Einlagerung der Lagerobjekttype des genannten Lagerobjektes 4a ermöglicht, das heißt ausreichend Platz dafür bietet und noch nicht belegt ist. Bei zwei hintereinanderliegenden virtuellen Stellplätze P1'..P4', welche jeweils die Einlagerung der Lagerobjekttype des genannten Lagerobjektes 4a ermöglichen, wird zunächst ein, insbesondere von der Regalgasse 5 aus gesehen, hinterer Stellplatz gewählt. In der Fig. 5 wird hierfür der Stellplatz P2' der Lagerbereichs-Segmentierung S5 gewählt.

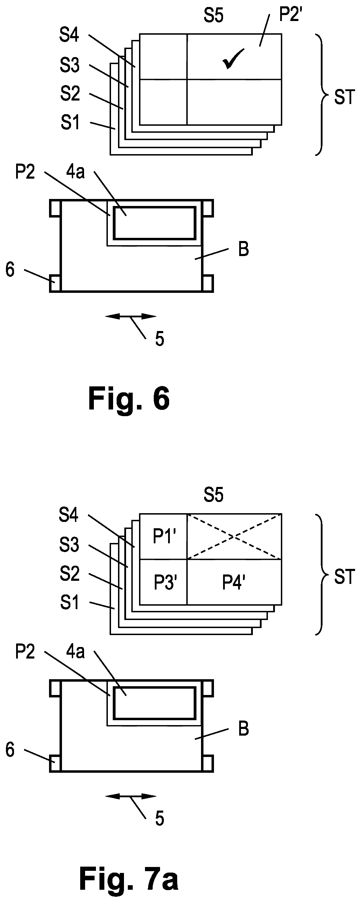

In einem in Fig. 6 dargestellten Schritt d) wird das Lagerobjekt 4a auf einen physischen Stellplatz P2 des Lagerbereiches B, welcher dem ausgewählten virtuellen Stellplatz P2' zugeordnet ist beziehungsweise entspricht, durch das Regalbediengerät 11 (siehe Fig. 1 und 2) eingelagert.

In einem Schritt e) wird ein Status des virtuellen Stellplatzes P2' im elektronischen Speicher 22, welcher angibt, ob der zugeordnete physische Stellplatz P2 durch ein Lagerobjekt 4a belegt ist, von unbelegt (frei) auf belegt geändert.

In einem Schritt f) werden nun die virtuellen Stellplätze P1'..P5' der dem Lagerbereich B zugeordneten Lagerbereichs-Segmentierungen S1..S5 auf virtuelle Stellplätze P1'..P4' eingeschränkt, welche die Einlagerung eines weiteren Lagerobjekts 4a ermöglichen. Hierbei bleibt einerseits der virtuelle Stellplatzes P2' der Lagerbereichs-Segmentierung S5, wie zuvor beschrieben, als belegt markiert. Andererseits wird der Status jener virtuellen Stellplätze der anderen Lagerbereichs-Segmentierungen S 1..S4, welche im Stapel ST vom virtuellen Stellplatz P2' zumindest teilweise verdeckt sind bzw. mit diesem überlappen, ebenfalls von unbelegt (frei) auf belegt bzw. nicht verfügbar geändert, da diese keine weitere Einlagerung eines Lagerobjektes 4a der zum virtuellen Stellplatz korrespondierenden Lagerobjekttype ermöglicht.

Das Ergebnis der Schritte e) und f) ist in der Fig. 7a dargestellt. Wie gut erkennbar ist, ist der virtuelle Stellplatz P2' der Lagerbereichs-Segmentierung S5 als "belegt" gekennzeichnet. Jene nicht dargestellten virtuellen Stellplätze der weiteren Lagerbereichs-Segmentierungen S1..S4, welche mit dem virtuellen Stellplatz P2' überlappen bzw. von diesem zumindest teilweise verdeckt sind, sind ebenfalls als "belegt" gekennzeichnet.

Alternativ können im Schritt f) die dem Lagerbereich B zugeordneten Lagerbereichs-Segmentierungen S 1..S5 auf eine oder mehrere Lagerbereichs-Segmentierung(en) S 1..S5, welche den gewählten virtuellen Stellplatz P2' beinhalten, im elektronischen Speicher 22 eingeschränkt werden. Auch dadurch werden verfügbare virtuelle Stellplätze P1'..P5' eingeschränkt, wobei gleichzeitig eine Anzahl der Lagerbereichs-Segmentierungen S 1..S5 reduziert wird.

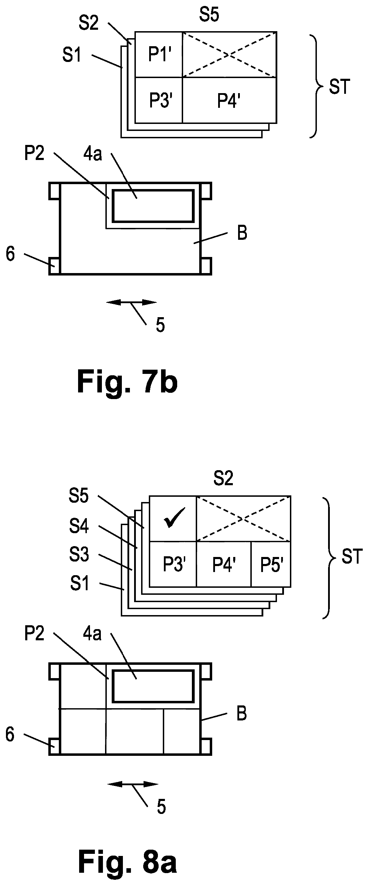

Das aus dem alternativen Schritt f) resultierende Ergebnis ist in der Fig. 7b dargestellt. Wie gut erkennbar ist, ist einerseits der virtuelle Stellplatz P2' als "belegt" gekennzeichnet und andererseits ist auch die Anzahl der möglichen Lagerbereichs-Segmentierungen S 1..S5 gesunken. Konkret verbleiben in diesem Beispiel die Lagerbereichs-Segmentierungen S1, S2 und S5, da angenommen wird, dass die Lagerbereichs-Segmentierungen S3 und S4 den virtuellen Stellplatz P2' nicht beinhalten.

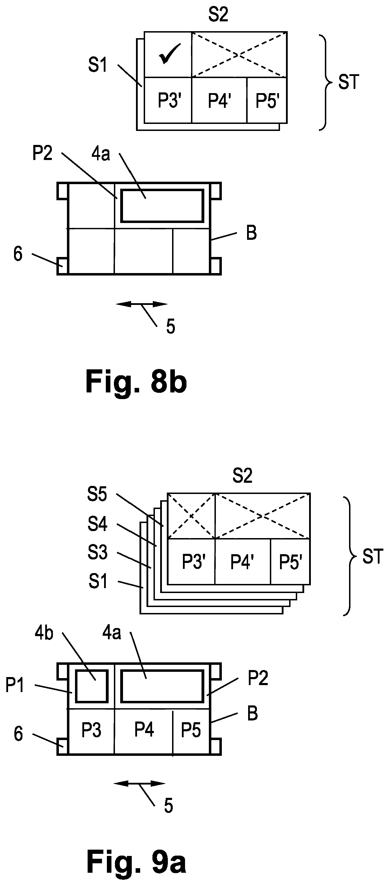

Die Schritte b) bis f) können nun bei Bedarf wiederholt werden. So zeigt die Fig. 8a die Auswahl eines weiteren virtuellen Stellplatzes P1', nun aber aus der Lagerbereichs-Segmentierung S2, welche die virtuellen Stellplätze P1'..P5' aufweist. Der virtuelle Stellplatz P2' der Lagerbereichs-Segmentierung S2 ist bereits als "belegt" gekennzeichnet, da dieser mit dem virtuellen Stellplatz P2' der Lagerbereichs-Segmentierung P5 überlappt, wie aus einer Zusammenschau der Fig. 7a und Fig. 8a hervorgeht. Ferner können die dem Lagerbereich B zugeordneten Lagerbereichs-Segmentierungen S1..S5 bereits gemäß dem zuvor beschriebenen alternativen Schritt f) eingeschränkt sein, wie dies in Fig. 8b gezeigt ist. Konkret verbleiben in diesem Beispiel die Lagerbereichs-Segmentierungen S1 und S2.

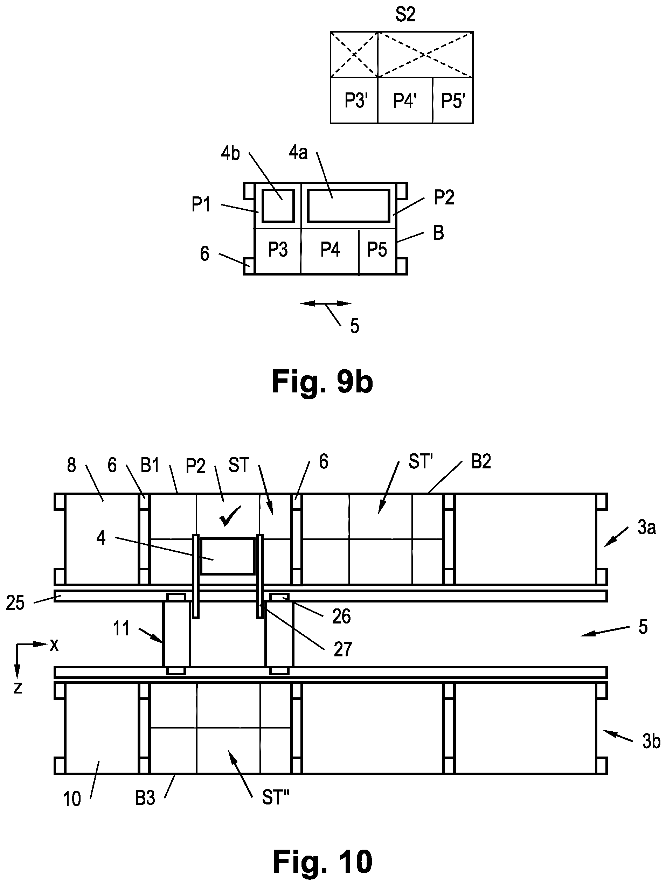

Die Fig. 9a zeigt schließlich das Ergebnis eines weiteren Durchlaufs der Schritte b) bis f) nach der Einlagerung eines Lagerobjekts 4b auf einen physischen Stellplatz P1. Fig. 9b zeigt in analoger Weise das Ergebnis eines weiteren Durchlaufs der Schritte b) bis f) für den alternativen Schritt f).

Generell ist es von Vorteil, wenn im Schritt c) jener virtuelle Stellplatz P1'..P5' oder jener physische Stellplatz P1..P5 gewählt wird, welcher die beste Platzausnutzung durch das Lagerobjekt 4a, 4b bietet. Das Lagerobjekt 4a, 4b ist ja regelmäßig kleiner als der physische Stellplatz P1..P5, auf dem es eingelagert wird. Vorteilhaft ist es nun, wenn der innerhalb des physischen Stellplatzes P1..P5 nicht durch das Lagerobjekt 4a, 4b belegte Platz möglichst klein ist. Der Begriff "Platzausnutzung" kann sich dabei entweder auf die Ausnutzung einer eindimensionalen Breite, einer eindimensionalen Tiefe, einer eindimensionalen Höhe, einer zweidimensionalen Fläche (wie in den in den Fig. dargestellten Beispielen) oder eines dreidimensionalen Raumes beziehen.

Denkbar wäre generell, dass nicht nur eine Lagerbereichs-Segmentierung S5 der Lagerbereichs-Segmentierungen S1..S5 einen möglichen virtuellen Stellplatz P1'..P5' bietet, sondern mehrere der Lagerbereichs-Segmentierungen S1..S5, so wie das in den Fig. 3 bis 9 beispielsweise für die virtuellen Stellplätze P1'..P3' in den Lagerbereichs-Segmentierungen S2 und S5 angedeutet ist. Die Auswahl genau einer Lagerbereichs-Segmentierung S2, S5 kann nun auf unterschiedliche Weise erfolgen.

Alternativ kann auch vorgesehen sein, dass jeder mögliche virtuelle Stellplatz P1'..P5' jeweils nur in einer Lagerbereichs-Segmentierung der Lagerbereichs-Segmentierungen S1..S5 vorhanden ist. Somit kann einerseits durch eine Kombination der virtuellen Stellplätze P1'..P5' der unterschiedlichen Lagerbereichs-Segmentierungen S1..S5 mit einer geringen Gesamtanzahl an Lagerbereichs-Segmentierungen S1..S5 eine Vielzahl an möglichen Anordnungen von Lagerobjekttypen innerhalb des Lagerbereichs B abgebildet werden. Andererseits kann eine eindeutige Zuweisung eines Lagerobjektes 4a, 4b zu einem einzigen virtuellen Stellplatz der virtuellen Stellplätze P1'..P5' und einer einzigen Lagerbereichs-Segmentierung der Lagerbereichs-Segmentierungen S1..S5 erfolgen. Die virtuellen Stellplätze P1'..P5' und die Lagerbereichs-Segmentierungen S1..S5 bilden somit im Wesentlichen ein eindeutiges Koordinatensystem innerhalb des Lagerbereiches B.

Beispielsweise kann als Kriterium für die Auswahl eines virtuellen Stellplatzes P1'..P5' im Schritt c) eine Maximalanzahl an Lagerbereichs-Segmentierungen S1..S5 vorgesehen werden, welche im, insbesondere alternativen, Schritt f) nach dem Einschränken der dem Lagerbereich B zugeordneten Lagerbereichs-Segmentierungen S1..S5 verbleibt. Mit anderen Worten soll der Stapel ST möglichst hoch bleiben. Dies führt zu hoher Flexibilität bei der Einlagerung weiterer Lagerobjekte 4b, da dann eine große Anzahl an verschiedenen Möglichkeiten zur Verfügung steht.

Denkbar ist aber auch, dass als Kriterium für die Auswahl eines virtuellen Stellplatzes P1'..P5' im Schritt c) eine Maximalanzahl an virtuellen Stellplätzen P1'..P5' vorgesehen wird, welche im Schritt f) nach dem Einschränken der virtuellen Stellplätze P1'..P5' in den dem Lagerbereich B zugeordneten Lagerbereichs-Segmentierungen S1..S5 verbleibt. Dies führt zu hoher Lagerkapazität hinsichtlich der Anzahl weiterer einzulagernder Lagerobjekte 4b.

Erfindungsgemäß wird ein virtueller Stellplatz P1'..P5' nach dem Kriterium einer Priorisierung hinterer virtueller Stellplätze bei mehreren hintereinanderliegenden virtuellen Stellplätzen ausgewählt. Generell kann ein virtueller Stellplatz P1'..P5' ferner nach einem oder mehreren der folgenden Kriterien ausgewählt werden: Umschlaghäufigkeit des Lagerobjekts 4..4b, gleichmäßige Belegung der Lagerregale 3a, 3b mit Lagerobjekten 4..4b, Kumulierung von Lagerobjekten 4..4b gleicher oder ähnlicher Lagerobjekttype, Füllgrad in einem als Ladehilfsmittel ausgebildeten Lagerobjekt 4..4b, Füllgrad eines Lagerbereichs B, Trennung von Gefahrengut von ungefährlichen Lagerobjekten 4..4b, Transportweg eines Lagerobjekts 4..4b von einem physischen Stellplatz P1..P5 zu einer Übergabevorrichtung, wobei das Lagerobjekt 4..4b auf dem genannten Transportweg mit Hilfe des Regalbediengeräts 11 transportiert wird, Transportweg eines Lagerobjekts 4..4b von einer Übernahmevorrichtung (gemäß obiger Ausführung beispielsweise eine Bereitstellvorrichtung 8), zu einem physischen Stellplatz P1..P5, wobei das Lagerobjekt 4..4b auf dem genannten Transportweg mit Hilfe des Regalbediengeräts 11 transportiert wird, Priorisierung größerer vorderer physischer Stellplätze P1..P5 oder virtueller Stellplätze P1'..P5' bei mehreren hintereinanderliegenden physischen Stellplätzen P1..P5 / virtuellen Stellplätzen P1'..P5', Minimierung der Einlagerzeit durch ein Regalbediengerät 11, Maximierung der Anzahl der auf einmal durch ein Regalbediengerät 11 eingelagerten Lagerobjekte 4..4b.

Die genannte Übernahmevorrichtung betrifft den Einlagervorgang. Gemäß den obigen Ausführungen umfasst dabei die Übernahmevorrichtung eine Puffervorrichtung mit einer Vielzahl von Bereitstellvorrichtungen 8, wobei von jeder Bereitstellvorrichtung 14 ein Regalbediengerät 11 zumindest ein Lagerobjekten 4..4b abholen kann. Die genannte Übergabevorrichtung betrifft den Auslagervorgang. Gemäß den obigen Ausführungen umfasst dabei die Übergabevorrichtung eine Puffervorrichtung mit einer Vielzahl von Bereitstellvorrichtungen 10, wobei an jede Bereitstellvorrichtung 10 ein Regalbediengerät 11 zumindest ein Lagerobjekten 4..4b abgeben kann. Das Regalbediengerät 11 ist vorzugsweise ein Einebenenregalbediengerät.

Wird anstelle des Einebenenregalbediengeräts 11 ein Mehrebenenregalbediengerät verwendet, wie dies beispielsweise in der WO 2016/141395 A1, Fig. 1 und 2 dargestellt ist, umfasst dabei die Übernahmevorrichtung (für den Einlagervorgang) eine Puffervorrichtung mit einer Bereitstellvorrichtung, wobei von dieser ein Regalbediengerät zumindest ein Lagerobjekt 4..4b abholen kann, und umfasst dabei die Übergabevorrichtung (für den Auslagervorgang) eine Puffervorrichtung mit einer Bereitstellvorrichtung, wobei an diese ein Regalbediengerät zumindest ein Lagerobjekt 4..4b abgeben kann. Eine Einlager-Fördertechnik umfasst eine Fördervorrichtung zum Antransport von Förderobjekten 4, welche die Bereitstellvorrichtung ausbildet. Eine Auslager-Fördertechnik umfasst eine Fördervorrichtung zum Abtransport von Förderobjekten 4, welche die Bereitstellvorrichtung ausbildet. Ein solches Mehrebenenregalbediengerät umfasst zumindest eine auf einem Vertikalmast bewegbare Transportplattform, wobei der Vertikalmast auf einem Fahrwerk angeordnet ist, sodass die Transportplattform in einer x-Richtung und einer y-Richtung bewegbar ist, um Lagerobjekte 4..4b auf physische Stellplätzen P1..P5 einzulagern und von Stellplätzen P1..P5 auszulagern. Die Transportplattform umfasst wiederum eine Lastaufnahmevorrichtung, wie sie beispielsweise oben beschrieben ist.

Erfolgt der Antransport und der Abtransport der Lagerobjekte 4..4b mit Hilfe von (autonomen) Flurförderfahrzeugen, dann kann die stationäre Fördertechnik zum Antransport und der Abtransport der Lagerobjekte 4..4b entfallen. Die Fördertechnik 15, 19 zum Antransport und der Abtransport der Lagerobjekte 4..4b umfasst dann die (autonomen) Flurförderfahrzeuge. Die Lagerobjekte 4..4b werden für eine Einlagerung von einem Flurförderfahrzeug direkt oder unter Zwischenanordnung einer Abholstation an die Vertikalfördervorrichtung 13, insbesondere die zumindest eine Transportplattform 14a, transportiert, Die Lagerobjekte 4..4b werden für eine Auslagerung von der Vertikalfördervorrichtung 17, insbesondere die zumindest eine Transportplattform 18, direkt an ein Flurförderfahrzeug oder unter Zwischenanordnung einer Abholstation an ein Flurförderfahrzeug transportiert, Das Regallagersystem 1 umfasst dann im Wesentlichen die Lagerregale 3a, 3b, eine oder mehrere Regalbediengeräte 11 (eine oder mehrere Einebenenregalbediengeräte und ein Mehrebenenregalbediengerät) und die Puffervorrichtungen, insbesondere die Bereitstellvorrichtung, welche der Einlagerung von Förderobjekten 4..4b und der Auslagerung von Förderobjekten 4..4b dienen.

Wird die Umschlaghäufigkeit des Lagerobjekts 4..4b als Kriterium für die Auswahl eines virtuellen Stellplatzes P1'..P5' herangezogen, so können Schnelldreher (A-Artikel) eher in der Nähe einer Übernahmevorrichtung oder Übergabevorrichtung eingelagert werden, wohingegen Langsamdreher (C-Artikel) eher weiter entfernt von einer Übernahmevorrichtung oder Übergabevorrichtung eingelagert werden. Wenn ein Lagerbereich B mehrere hintereinanderliegende physische Stellplätze P1..P5 aufweist, so werden vorteilhaft die hinteren physischen Stellplätze P1, P2 eher mit Langsamdrehern (C-Artikeln) belegt, die vorderen physischen Stellplätze P3, P4, P5 eher mit Schnelldrehern (A-Artikeln). Wenn ein Lagerbereich B mehrere hintereinanderliegende physische Stellplätze P1..P5 aufweist, so können diese bevorzugt auch mit Lagerobjekten 4..4b gleicher oder ähnlicher Lagerobjekttype belegt werden. Dadurch kann die Zahl der in einem Einlagervorgang oder einem Auslagervorgang manipulierten Lagerobjekten 4..4b gut variiert werden.

Denkbar wäre auch, dass die einem Lagerbereich B zugeordneten Lagerbereichs-Segmentierungen S1..S5 anhand eines Sortierkriteriums sortiert werden und im Schritt c) jene Lagerbereichs-Segmentierung S1..S5 mit der höchsten Priorität ausgewählt wird. Mit anderen Worten wird in diesem Fall der Stapel ST anhand eines Sortierkriteriums sortiert, wobei etwa die zuoberst zu liegen kommende Lagerbereichs-Segmentierung S2, S5 die höchste Priorität aufweist, also im Schritt c) bevorzugt ausgewählt wird. Als Sortierkriterium kann zum Beispiel die Anzahl der in einer Lagerbereichs-Segmentierung S1..S5 enthaltenen virtuellen Stellplätze P1'..P5' dienen, wobei die Priorität mit der Anzahl der virtuellen Stellplätze P1'..P5' ansteigt. Demzufolge werden nach Möglichkeit jene Lagerbereichs-Segmentierungen S1..S5 gewählt, bei denen nach der Belegung eines physischen Stellplatzes P1..P5 durch das einzulagernde Lagerobjekt 4..4b noch möglichst viele virtuelle Stellplätze P1'..P5' beziehungsweise physische Stellplätze P1..P5 frei bleiben. Insbesondere kann auch eines oder mehrere der oben offenbarten Kriterien herangezogen werden. Durch die vorgeschlagenen Maßnahmen kann die Auswahl einer passenden Lagerbereichs-Segmentierung S 1..S5 besonders effizient erfolgen.

In dem in den Fig. 3 bis 9 dargestellten Beispiel ist ein virtueller Stellplatz P1'..P5' und ein physischer Stellplatz P1..P5 in zwei Dimensionen x, z festgelegt. Ein physischer Stellplatz P1..P5 umfasst eine horizontale Stellfläche, welche in einer x-Richtung und einer z-Richtung (senkrecht zur x-Richtung) zwischen den Regalstehern 6, insbesondere zwei vorderen Regalstehern und zwei hinteren Regalstehern, aufgespannt ist. Demgemäß gibt auch die Lagerobjekttype die Größe eines Lagerobjekts 4..4b in zwei Dimensionen an.

Alternativ ist es aber auch möglich, dass ein virtueller Stellplatz P1'..P5' beziehungsweise ein physischer Stellplatz P1..P5 in drei Dimensionen x, y, z festgelegt ist. Ein physischer Stellplatz P1..P5 umfasst eine horizontale Stellfläche, welche in einer x-Richtung und einer z-Richtung (senkrecht zur x-Richtung) zwischen den Regalstehern 6, insbesondere zwei vorderen Regalstehern und zwei hinteren Regalstehern, aufgespannt ist, und definiert in einer y-Richtung (vertikal zur Stellfläche) eine Höhe. Demgemäß gibt die Lagerobjekttype die Größe eines Lagerobjekts 4..4b in drei Dimensionen an.

Alternativ kann ein physischer Stellplatz P1..P5 nur eine Dimension x, y, z festgelegen. Dies kann der Fall sein, wenn Ware lediglich mit unterschiedlicher Länge, aber einheitlicher Breite eingelagert wird.

Ein virtueller Stellplatz P1'..P5' ist die digitale Kopie beziehungsweise das digitale Abbild des jeweiligen physischen Stellplatzes P1..P5.

Die Lagerobjekttype kann darüber hinaus noch weitere Eigenschaften des Lagerobjekts 4..4b umfassen, beispielsweise ob es sich direkt um eine Ware handelt oder um ein Ladehilfsmittel, ob es sich um einen Schnelldreher oder Langsamdreher handelt, und so weiter.

Die Lagerobjekte 4..4b können auch übereinander gestapelt werden. Im Falle zweidimensionaler virtueller Stellplätze P1'..P5' erstreckt sich die Begrenzung derselben in die Höhe (also in y-Richtung), die Segmentierung dreidimensionaler virtueller Stellplätze P1'..P5' kann in unterschiedlichen Ebenen dagegen auch verschieden aussehen.

Generell wird auch angemerkt, dass die Verwendung rechteckförmiger beziehungsweise quaderförmiger virtueller Stellplätze P1'..P5' und physischer Stellplätze P1..P5 zwar von Vorteil ist, die virtuellen Stellplätze P1'..P5' und physischen Stellplätze P1..P5 hinsichtlich ihrer Formgebung aber beliebig ausgeführt sein können.

An dieser Stelle wird auch angemerkt, dass die Schritte d), e) und f) nicht zwingend in der oben angegebenen Reihenfolge ausgeführt werden müssen, sondern diese können auch in anderer Abfolge ausgeführt werden, beispielsweise in der Reihenfolge e) → d) → f) oder e) → f) → d) oder d) → f) → e). Dementsprechend wären auch die in den Fig. 6 und 7 dargestellten Zustände zeitlich umzugruppieren.

Von Vorteil ist es auch, wenn der Schritt f) in gleicher Weise für weitere Lagerbereiche B1..B3 ausgeführt wird, insbesondere für benachbarte und/oder gegenüberliegende Lagerbereiche B1..B3, so wie das in dem in Fig. 10 dargestellten Beispiel der Fall ist. In diesem Beispiel wird der virtuelle Stellplatz P2' beziehungsweise der physische Stellplatz P2 für die Einlagerung des Lagerobjekts 4 gewählt. Gemäß dieser Ausführungsvariante wird Schritt f) nun nicht nur für den Lagerbereich B1 ausgeführt, sondern in gleicher Weise auch für die Lagerbereiche B2 und B3. Dementsprechend reduziert sich nicht nur der Stapel ST an möglichen Lagerbereichs-Segmentierungen S 1..S5, sondern auch der Stapel ST' des Lagerbereichs B2 und der Stapel ST" des Lagerbereichs B3. Insbesondere betrifft die Ausführungsvariante in einer Regalgasse 5 einander gegenüberliegende Lagerbereiche B1, B3. Das heißt, Schritt f) wird in gleicher Weise insbesondere für einen in der Regalgasse 5 gegenüberliegenden Lagerbereich B3 ausgeführt. Mit Hilfe der vorgeschlagenen Maßnahmen können zum Beispiel physische Stellplätze P1..P5 in einem Lagerbereich B2, B3 frei gehalten werden, welche die einfache Umlagerung von Lagerobjekten 4 ermöglichen. Bei steigendem Füllgrad in einem der Lagerregale 3a, 3b oder wenn die Lagerobjekte 4 anders priorisiert werden, kann eine Umverteilung von Lagerobjekten 4, das heißt eine Umlagerung von Lagerobjekten 4 von einem zum anderen physischen Stellplatz P1..P5 oder von einem zum anderen Lagerbereich B 1..B3 (im selben Lagerregal 3a oder in einem anderen im selben Lagerregal 3b) nötig oder sinnvoll sein. Dadurch, dass der Schritt f) für benachbarte Lagerbereiche B 1..B3 ausgeführt wird, ist die Wahrscheinlichkeit für einen freien physischen Stellplatz P2, welche die (temporäre) Einlagerung des Lagerobjekts 4 ermöglicht, hoch. Ein Umsortieren der Lagerobjekte 4 kann somit in effizienter Weise durchgeführt werden. Beispielsweise kann ein solcher Umlagervorgang in Zeiten geringer Belastung ausgeführt werden, etwa in der Nacht.

Bei einem Umlagervorgang, bei welchem bereits eingelagerte Lagerobjekte 4 auf einen anderen physischen Stellplatz P1..P5 umgelagert werden, werden nach der Entnahme eines Lagerobjekts 4 von seinem ursprünglichen physischen Stellplatz P1..P5 beim Einlagern auf den anderen physischen Stellplatz P1..P5 vorteilhaft die Schritte b) bis f) ausgeführt. Vorteilhaft können dabei auch die bereits weiter oben genannten Kriterien berücksichtigt werden.

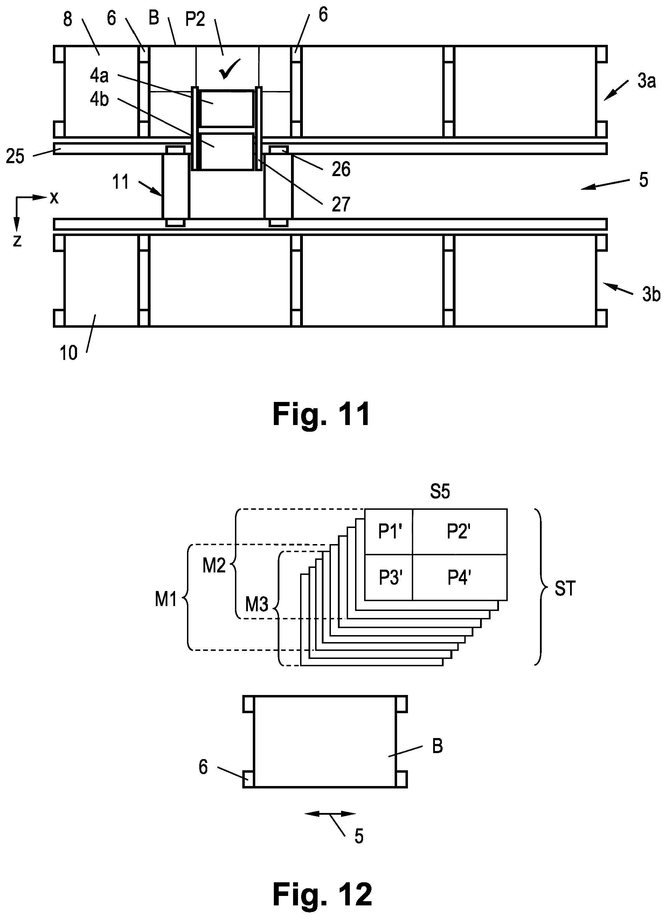

Denkbar ist auch, dass die Schritte b) bis f) für mehrere Lagerobjekte 4a, 4b auf einmal ausgeführt werden, wobei die Lagerobjekte 4a, 4b im Schritt c) in einer einzigen Lagerbereichs-Segmentierung S1..S5 oder in mehreren Lagerbereichs-Segmentierungen S1..S5 und im Schritt d) in einem einzigen Lagerbereich B eingelagert werden, so wie das in der Fig. 11 dargestellt ist. Diese Variante ist dann von Vorteil, wenn vom Regalbediengerät 11 mehr als ein Lagerobjekt 4a, 4b in einem Schritt beziehungsweise in einem einzigen Einlagervorgang eingelagert werden kann.

Insbesondere ist es dabei von Vorteil, wenn die physischen Stellplätze P1..P5 der Lagerobjekte 4a, 4b vom Regalbediengerät 11 aus gesehen in einer Einlagerrichtung z hintereinander angeordnet sind, so wie das ebenfalls in der Fig. 11 dargestellt ist. Auf diese Weise kann das Regalbediengerät 11 bei der Einlagerung mehrerer Lagerobjekte 4a, 4b an einer Position x stehen bleiben.

Besonders vorteilhaft ist es auch, wenn
mehrere Lagerbereichs-Segmentierungen S1..S5 zu einer Meta-Segmentierung M1..M3 zusammengefasst werden, wobei im Schritt c) zuerst ein virtueller Stellplatz P1'..P5' in der Vielzahl von Meta-Segmentierungen M1..M3 ausgewählt wird und dann ein virtueller Stellplatz P1'..P5' in der Vielzahl von Lagerbereichs-Segmentierungen S1..S5 der gewählten Meta-Segmentierung M1..M3 gewählt wird, und
im Schritt f) die dem Lagerbereich B zugeordneten Meta-Segmentierungen M1..M3 im elektronischen Speicher 22 des Lagerverwaltungssystems 21 auf eine oder mehrere Meta-Segmentierung(en) M1..M3 eingeschränkt werden, welche den gewählten virtuellen Stellplatz P1'..P5' beinhalten.

Fig. 12 zeigt dazu ein Beispiel. Wenn der Stapel ST der einem Lagerbereich B zugeordneten Lagerbereichs-Segmentierungen S1..S5 sehr groß wird, kann die Suche nach einem geeigneten virtuellen Stellplatz P1'..P5' für ein Lagerobjekt 4..4b zeitintensiv sein. Daher ist es in so einem Fall von Vorteil, Meta-Segmentierungen M1..M3, also Gruppen der Lagerbereichs-Segmentierungen S1..S5 zu bilden. Die Gruppen werden dabei beispielsweise nach dem Vorkommen bestimmter virtueller Stellplätze P1'..P5' gebildet. Beispielsweise kann die Meta-Segmentierung M1 die virtuellen Stellplätze P1', P2', die Meta-Segmentierung M2 die virtuellen Stellplätze P3', P5' und die Meta-Segmentierung M3 die virtuellen Stellplätze P1', P5' aufweisen. Die Meta-Segmentierungen M1..M3 können einander ausschließende Lagerbereichs-Segmentierungen S1..S5 aufweisen oder, so wie das in der Fig. 12 der Fall ist, Überschneidungsbereiche bilden.

Ist nun im Schritt c) ein für ein Lagerobjekt 4..4b geeigneter virtueller Stellplatz P1'..P5' zu wählen, so wird die Suche in den Meta-Segmentierung M1..M3 begonnen. In unserem Beispiel wird angenommen, dass der virtuelle Stellplatz P3' geeignet wäre. Demzufolge wird in einem ersten Schritt festgestellt, dass (nur) die Meta-Segmentierung M2 einen solchen aufweist. In weiterer Folge wird die Suche (nur) in den Lagerbereichs-Segmentierungen S1..S5 fortgesetzt, die in der Meta-Segmentierung M2 enthalten sind. Daraus wird klar, dass die Suche nach einem geeigneten virtuellen Stellplatz P1'..P5' für ein Lagerobjekt 4..4b beziehungsweise die Auswahl für einen geeigneten virtuellen Stellplatz P1'..P5' für ein Lagerobjekt 4..4b verkürzt wird, da nicht der gesamte Stapel ST an Lagerbereichs-Segmentierungen S1..S5 durchsucht werden muss.

Es sei auch darauf hingewiesen, dass das Regallagersystem 1 nach einer nicht gezeigten Ausführung auch lediglich ein einziges Lagerregal 3a, 3b zur Aufnahme mehrerer Lagerobjekte 4 unterschiedlicher Lagerobjekttype umfassen kann. Dieses umfasst Regalsteher 6 und übereinanderliegende Regalebenen E und eine Vielzahl von Lagerbereichen B, B1..B3, wie oben beschrieben. Die Lagerbereiche B sind jeweils zwischen zwei in einer Längsrichtung x des Lagerregals 3a, 3b voneinander beabstandeten Regalstehern 6 angeordnet. Das Regallagersystem 1 umfasst nach dieser Ausführung zumindest ein Regalbediengerät 11 zum Einlagern der Lagerobjekte 4, welches in der Längsrichtung x des Lagerregals verfahrbar ist. Ebenso umfasst das Regallagersystem 1 ein Lagerverwaltungssystem 21, welchem ein elektronischer Speicher 22 zugewiesen ist, wie oben beschrieben,

Die Anzahl der Lagerbereiche B kann abhängig von der Länge und/oder Höhe der Lagerregale 3a, 3b variieren.

Auch wenn nach den obigen Ausführungen das Lagerregal oder die Lagerregale ortsfest aufgestellt sind, ist es auch möglich, dass ein mobiles Lagerregal oder eine Vielzahl von mobilen Lagerregalen vorhanden sind. Das mobile Lagerregal oder die mobilen Lagerregale sind jeweils zur Aufnahme mehrerer Lagerobjekte 4 unterschiedlicher Lagerobjekttype ausgebildet und weisen Regalsteher 6 und übereinanderliegende Regalebenen E und eine Vielzahl von Lagerbereichen B, B1..B3 auf. Auch nach dieser Ausführung kann zumindest ein in der Längsrichtung x des Lagerregals verfahrbares Regalbediengerät zum Einlagern der Lagerobjekte 4 eingesetzt werden, welches auf einer Fahrfläche und unabhängig vom Lagerregal bewegt werden kann, Das zumindest eine Regalbediengerät ist ein autonomes Transportfahrzeug, beispielsweise ein AMR (Autonomous Mobile Robot) oder ein AGV (Automated Guided Vehicle), welches eine Lastaufnahmevorrichtung zum Einlagern der Lagerobjekte 4 umfasst. Die Lastaufnahmevorrichtung umfasst beispielsweise einen Gelenkarmroboter, welcher am Transportfahrzeug vorgesehen ist, und einen Abstellplatz, auf welchem zumindest ein Lagerobjekt 4 zum Transportiert aufgenommen werden kann.

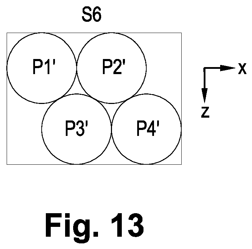

In Fig. 13 ist ein Beispiel für eine alternative Lagerbereichs-Segmentierung S6 mit einer runden beziehungsweise zylinderförmigen Formgebung für virtuelle Stellplätze P1'..P4' und physische Stellplätze P1..P4 gezeigt. Dies kann für eine Einlagerung von rund geformten Lagerobjekten 4, 4a, 4b vorteilhaft sein, insbesondere für Lagerobjekte 4, 4a, 4b einer Lagerobjekttype, deren Durchmesser wie im gezeigten Beispiel zumindest eine halbe Tiefe in z-Richtung oder eine halbe Breite in x-Richtung (nicht dargestellt) des Lagerbereichs B, B1..B3 beträgt oder diese übersteigt. Der zuvor beschriebene Stapel ST von Lagerbereichs-Segmentierungen S1..S5 kann Lagerbereichs-Segmentierungen S1..S5 mit rechteckiger und/oder quaderförmiger Formgebung und Lagerbereichs-Segmentierungen S1..S5 mit alternativer Formgebung umfassen, insbesondere mit runder oder zylinderförmiger Formgebung sowie mit Formen basierend auf Polygonen oder Ovalen.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Regallagersystem
- 3a, 3b: Lagerregal
- 4, 4a, 4b: Lagerobjekt
- 5: Regalgasse
- 6: Regalsteher

- 7: Einlager-Puffervorrichtung
- 8: Einlager-Bereitstellvorrichtung
- 9: Auslager-Puffervorrichtung
- 10: Auslager-Bereitstellvorrichtung
- 11: Regalbediengerät (Shuttle)

- 13: Einlager-Vertikalfördervorrichtung
- 14a, 14b: Einlager-Transportplattform
- 16a, 16b: Einlager-Fördervorrichtung
- 17: Auslager-Vertikalfördervorrichtung
- 18a, 18b: Auslager-Transportplattform

- 20a, 20b: Auslager-Fördervorrichtung
- 21: Lagerverwaltungssystem
- 22: elektronischer Speicher
- 23: Einlager-Vertikalmast
- 24: Auslager-Vertikalmast
- 25: Fahrschiene
- 26: Rad
- 27: Lastaufnahmevorrichtung

- B, B1..B3: Lagerbereich
- E: Regalebene
- F1, F2: Förderebene
- M1..M3: Meta-Segmentierung
- P, P1..P5: physischer Stellplatz

- P', P1'..P5': virtueller Stellplatz
- S1..S6: Lagerbereichs-Segmentierung
- ST, ST'..ST": Stapel an Lagerbereichs-Segmentierungen

- x: Längsrichtung/Längserstreckung (der Regalgasse)
- y: Vertikalrichtung/Vertikalerstreckung (des Lagerregals)
- z: Querrichtung/Quererstreckung (der Regalgasse)

## Patentansprüche

1. Verfahren zum Einlagern mehrerer Lagerobjekte (4, 4a, 4b) unterschiedlicher Lagerobjekttype in ein Lagerregal (3a, 3b), welches Regalsteher (6), übereinanderliegende Regalebenen (E) und eine Vielzahl von Lagerbereichen (B, B1..B3) umfasst, wobei die Lagerbereiche (B, B1..B3) jeweils zwischen zwei in einer Längsrichtung (x) des Lagerregals (3a, 3b) beabstandeten Regalstehern (6) angeordnet sind, wobei eine Einlagerung der Lagerobjekte (4, 4a, 4b) von einem Lagerverwaltungssystem (21) gesteuert wird, welchem ein elektronischer Speicher (22) zugewiesen ist, und wobei das Verfahren folgende Schritte umfasst:
a) Zuordnen mehrerer Lagerbereichs-Segmentierungen (S1..S6) zu einem Lagerbereich (B, B1..B3) der Lagerbereiche (B, B1..B3) im elektronischen Speicher (22) für die Vielzahl von Lagerbereichen (B, B1..B3), wobei die Lagerbereichs-Segmentierungen (S1..S6) jeweils eine Vielzahl von virtuellen Stellplätzen (P', P1'..P5') für die Lagerobjekte (4, 4a, 4b) umfassen und eine mögliche Anordnung der Lagerobjekttypen innerhalb des genannten Lagerbereichs (B, B1..B3) angeben,
b) Erfassen der Lagerobjekttype eines einzulagernden Lagerobjektes (4, 4a, 4b),
c) Auswahl eines virtuellen Stellplatzes (P', P1'..P5') für die Lagerobjekttype des einzulagernden Lagerobjektes (4, 4a, 4b) in der Vielzahl von Lagerbereichs-Segmentierungen (S1..S6) durch das Lagerverwaltungssystem (21), wobei der virtuelle Stellplatz (P', P1'..P5') die Einlagerung der Lagerobjekttype des genannten Lagerobjektes (4, 4a, 4b) ermöglicht, wobei der virtuelle Stellplatz (P', P1'..P5') nach dem Kriterium einer Priorisierung hinterer virtueller Stellplätze (P', P1'..P5') bei mehreren hintereinanderliegenden virtuellen Stellplätzen (P', P1'..P5') ausgewählt wird,
d) Einlagern des Lagerobjektes (4, 4a, 4b) auf einen physischen Stellplatz (P, P1..P5) des Lagerbereiches (B, B1..B3), welcher dem ausgewählten virtuellen Stellplatz (P', P1'..P5') zugeordnet ist, durch ein in der Längsrichtung (x) des Lagerregals (3a, 3b) verfahrbares Regalbediengerät (11),
e) Ändern eines Status des virtuellen Stellplatzes (P', P1'..P5') im elektronischen Speicher (22), welcher angibt, ob der zugeordnete physische Stellplatz (P, P1..P5) durch ein Lagerobjekt (4, 4a, 4b) belegt ist, von unbelegt auf belegt,
f) Einschränken der virtuellen Stellplätze (P', P1'..P5') in den dem Lagerbereich (B, B1..B3) zugeordneten Lagerbereichs-Segmentierungen (S1..S6) auf virtuelle Stellplätze (P', P1'..P5'), welche die Einlagerung eines weiteren Lagerobjektes (4, 4a, 4b) auf einen physischen Stellplatz (P, P1..P5) ermöglichen, im elektronischen Speicher (22), und
g) Wiederholen der Schritte b) bis f).

2. Verfahren nach Anspruch 1, **dadurch gekennzeichnet, dass** das Einschränken der virtuellen Stellplätze (P', P1'..P5') im Schritt f) ein Einschränken der dem Lagerbereich (B, B1..B3) zugeordneten Lagerbereichs-Segmentierungen (S1..S6) auf eine oder mehrere Lagerbereichs-Segmentierung(en) (S1..S6), welche den gewählten virtuellen Stellplatz (P', P1'..P5') beinhalten, im elektronischen Speicher umfasst.

3. Verfahren nach Anspruch 1 oder 2, **dadurch gekennzeichnet, dass** als Kriterium für die Auswahl eines virtuellen Stellplatzes (P', P1'..P5') im Schritt c) eine Maximalanzahl an virtuellen Stellplätzen (P', P1'..P5') vorgesehen wird, welche im Schritt f) nach dem Einschränken der virtuellen Stellplätze (P', P1'..P5') verbleibt.

4. Verfahren nach Anspruch 2, **dadurch gekennzeichnet, dass** als Kriterium für die Auswahl eines virtuellen Stellplatzes (P', P1'..P5') im Schritt c) eine Maximalanzahl an Lagerbereichs-Segmentierungen (S1..S6) vorgesehen wird, welche im Schritt f) nach dem Einschränken der dem Lagerbereich (B, B1..B3) zugeordneten Lagerbereichs-Segmentierungen (S1..S6) verbleibt.

5. Verfahren nach einem der Ansprüche 1 bis 4, **dadurch gekennzeichnet, dass** ein virtueller Stellplatz (P', P1'..P5') ferner nach einem oder mehreren der folgenden Kriterien: Umschlaghäufigkeit des Lagerobjekts (4, 4a, 4b), gleichmäßige Belegung des Regallagersystems (1) mit Lagerobjekten, Kumulierung von Lagerobjekten (4, 4a, 4b) gleicher oder ähnlicher Lagerobjekttype, Füllgrad in einem als Ladehilfsmittel ausgebildeten Lagerobjekt (4, 4a, 4b), Füllgrad eines Lagerbereichs (B, B1..B3), Trennung von Gefahrengut von ungefährlichen Lagerobjekten (4, 4a, 4b), Transportweg eines Lagerobjekts (4, 4a, 4b) von einem physischen Stellplatz (P, P1..P5) zu einer Übergabevorrichtung, wobei das Lagerobjekt (4, 4a, 4b) auf dem genannten Transportweg mit Hilfe des Regalbediengeräts (11) transportiert wird, Transportweg eines Lagerobjekts (4, 4a, 4b) von einer Übernahmevorrichtung zu einem physischen Stellplatz (P, P1..P5), wobei das Lagerobjekt (4, 4a, 4b) auf dem genannten Transportweg mit Hilfe des Regalbediengeräts (11) transportiert wird, Priorisierung größerer vorderer virtueller Stellplätze (P', P1'..P5') oder physischer Stellplätze (P, P1..P5) bei mehreren hintereinanderliegenden virtuellen Stellplätzen (P', P1'..P5') oder physischen Stellplätzen (P, P1..P5), Minimierung der Einlagerzeit durch das Regalbediengerät (11), Maximierung der Anzahl der auf einmal durch das Regalbediengerät (11) eingelagerten Lagerobjekten (4, 4a, 4b) ausgewählt wird.

6. Verfahren nach einem der Ansprüche 3 bis 5, **dadurch gekennzeichnet, dass** eines oder mehrere der genannten Kriterien bei einem Umlagervorgang berücksichtigt werden, bei welchem bereits eingelagerte Lagerobjekte (4, 4a, 4b) auf einen anderen physischen Stellplatz (P, P1..P5) umgelagert werden, wobei die Schritte b) bis f) nach der Entnahme eines Lagerobjekts (4, 4a, 4b) von seinem ursprünglichen physischen Stellplatz (P, P1..P5) beim Einlagern auf den anderen physischen Stellplatz (P, P1..P5) ausgeführt werden.

7. Verfahren nach einem der Ansprüche 1 bis 6, **dadurch gekennzeichnet, dass** die Schritte b) bis f) für mehrere Lagerobjekte (4, 4a, 4b) auf einmal ausgeführt werden, wobei die Lagerobjekte (4, 4a, 4b) im Schritt c) in einer oder mehreren Lagerbereichs-Segmentierung(en) (S1..S6) und im Schritt d) in einem einzigen Lagerbereich (B, B1..B3) eingelagert werden, wobei das Regalbediengerät zur Einlagerung von mehr als einem Lagerobjekt in einem einzigen Schritt ausgebildet ist.

8. Verfahren nach Anspruch 7, **dadurch gekennzeichnet, dass** die physischen Stellplätze (P, P1..P5) der Lagerobjekte (4, 4a, 4b) in einer Einlagerrichtung (z) hintereinander angeordnet sind.

9. Verfahren nach einem der Ansprüche 1 bis 8, **dadurch gekennzeichnet, dass**
mehrere Lagerbereichs-Segmentierungen (S1..S6) zu einer Meta-Segmentierung (M1..M3) zusammengefasst werden, wobei im Schritt c) zuerst ein virtueller Stellplatz (P', P1'..P5') in der Vielzahl von Meta-Segmentierungen (M1..M3) ausgewählt wird und dann ein virtueller Stellplatz (P', P1'..P5') in der Vielzahl von Lagerbereichs-Segmentierungen (S1..S6) der gewählten Meta-Segmentierung (M1..M3) gewählt wird, und
im Schritt f) die dem Lagerbereich (B, B1..B3) zugeordneten Meta-Segmentierungen (M1..M3) im elektronischen Speicher (22) auf eine oder mehrere Meta-Segmentierung(en) (M1..M3) eingeschränkt werden, welche den gewählten virtuellen Stellplatz (P', P1'..P5') beinhalten.

10. Verfahren nach einem der Ansprüche 1 bis 9, **dadurch gekennzeichnet, dass** die einem Lagerbereich (B, B1..B3) zugeordneten Lagerbereichs-Segmentierungen (S1..S6) anhand eines Sortierkriteriums sortiert werden und im Schritt c) jene Lagerbereichs-Segmentierung (S1..S6) ausgewählt wird, welche den gewählten virtuellen Stellplatz (P', P1'..P5') und die höchste Priorität aufweist.

11. Verfahren nach einem der Ansprüche 1 bis 10, **dadurch gekennzeichnet, dass** im Schritt c) jener virtuelle Stellplatz (P', P1'..P5') gewählt wird, welcher die beste Platzausnutzung durch das Lagerobjekt (4, 4a, 4b) bietet.

12. Verfahren nach einem der Ansprüche 1 bis 11, **dadurch gekennzeichnet, dass** der Schritt f) in gleicher Weise für weitere Lagerbereiche (B, B1..B3) ausgeführt wird.

13. Regallagersystem (1), umfassend
zumindest ein Lagerregal (3a, 3b) zur Aufnahme mehrerer Lagerobjekte (4, 4a, 4b) unterschiedlicher Lagerobjekttype, welches Regalsteher (6), übereinanderliegende Regalebenen (E) und eine Vielzahl von Lagerbereichen (B, B1..B3) aufweist, wobei die Lagerbereiche (B, B1..B3) jeweils zwischen zwei in einer Längsrichtung (x) des Lagerregals (3a, 3b) voneinander beabstandeten Regalstehern (6) angeordnet sind,
zumindest ein in der Längsrichtung (x) des Lagerregals (3a, 3b) verfahrbares Regalbediengerät (11) zum Einlagern der Lagerobjekte (4, 4a, 4b), und
ein Lagerverwaltungssystem (21), welchem ein elektronischer Speicher (22) zugewiesen ist,
wobei das Lagerverwaltungssystem (21) zur Durchführung folgender Schritte ausgebildet ist:
a) Zuordnen mehrerer Lagerbereichs-Segmentierungen (S1..S6) zu einem Lagerbereich (B, B1..B3) der Lagerbereiche (B, B1..B3) im elektronischen Speicher (22) für die Vielzahl von Lagerbereichen (B, B1..B3), wobei die Lagerbereichs-Segmentierungen (S1..S6) jeweils eine Vielzahl von virtuellen Stellplätzen (P', P1'..P5') für die Lagerobjekte (4, 4a, 4b) umfassen und eine mögliche Anordnung der Lagerobjekttypen innerhalb des genannten Lagerbereichs (B, B1..B3) angeben,
b) Erfassen der Lagerobjekttype eines einzulagernden Lagerobjektes (4, 4a, 4b),
c) Auswahl eines virtuellen Stellplatzes (P', P1'..P5') für die Lagerobjekttype des einzulagernden Lagerobjektes (4, 4a, 4b) in der Vielzahl von Lagerbereichs-Segmentierungen (S1..S6), wobei der virtuelle Stellplatz (P', P1'..P5') die Einlagerung der Lagerobjekttype des genannten Lagerobjektes (4, 4a, 4b) ermöglicht, wobei der virtuelle Stellplatz (P', P1'..P5') nach dem Kriterium einer Priorisierung hinterer virtueller Stellplätze (P', P1'..P5') bei mehreren hintereinanderliegenden virtuellen Stellplätzen (P', P1'..P5') ausgewählt wird,
d) Ansteuern des Regalbediengeräts (11) zwecks Einlagerung des Lagerobjektes (4, 4a, 4b) auf einen physischen Stellplatz (P, P1..P5) des Lagerbereiches (B, B1..B3), welcher dem ausgewählten virtuellen Stellplatz (P', P1'..P5') zugeordnet ist,
e) Ändern eines Status des virtuellen Stellplatzes (P', P1'..P5') im elektronischen Speicher (22), welcher angibt, ob der zugeordnete physische Stellplatz (P, P1..P5) durch ein Lagerobjekt (4, 4a, 4b) belegt ist, von unbelegt auf belegt,
f) Einschränken der virtuellen Stellplätze (P', P1'..P5') in den dem Lagerbereich (B, B1..B3) zugeordneten Lagerbereichs-Segmentierungen (S1..S6) auf virtuelle Stellplätze (P', P1'..P5'), welche die Einlagerung eines weiteren Lagerobjektes (4, 4a, 4b) auf einen physischen Stellplatz (P, P1..P5) ermöglichen, im elektronischen Speicher (22), und
g) Wiederholen der Schritte b) bis f).

14. Regalsystem nach Anspruch 13, **dadurch gekennzeichnet, dass** das Einschränken der virtuellen Stellplätze (P', P1'..P5') im Schritt f) ein Einschränken der dem Lagerbereich (B, B1..B3) zugeordneten Lagerbereichs-Segmentierungen (S1..S6) auf eine oder mehrere Lagerbereichs-Segmentierung(en) (S1..S6), welche den gewählten virtuellen Stellplatz (P', P1'..P5') beinhalten, im elektronischen Speicher umfasst.

## Claims

1. A method for storing multiple storage objects (4, 4a, 4b) of different storage-object types in a storage rack (3a, 3b), which comprises uprights (6), rack levels (E) located on top of one another and a plurality of storage regions (B, B1..B3), wherein the storage regions (B, B1..B3) are respectively arranged between two uprights (6) spaced apart from each other in a longitudinal direction (x) of the storage rack (3a, 3b), wherein a storage of the storage objects (4, 4a, 4b) is controlled by a warehouse management system (21), to which an electronic memory (22) is allocated, and wherein the method comprises the following steps:
a) assigning multiple storage region segmentations (S1..S6) to a storage region (B, B1..B3) of the storage regions (B, B1..B3) in the electronic memory (22) for the plurality of storage regions (B, B1..B3), wherein the storage region segmentations (S1..S6) respectively comprise a plurality of virtual receiving locations (P', P1'..P5') for the storage objects (4, 4a, 4b) and specify a possible arrangement of the storage-object types inside said storage region (B, B1..B3),
b) acquiring the storage-object type of a storage object to be stored (4, 4a, 4b),
c) selecting a virtual receiving location (P', P1'..P5') for the storage-object type of the storage object (4, 4a, 4b) to be stored in the plurality of storage region segmentations (S1..S6) by means of the warehouse management system (21), wherein the virtual receiving location (P', P1'..P5') enables the storage of the storage-object type of said storage object (4, 4a, 4b), wherein the virtual receiving location (P', P1'..P5') is selected according to the criterion of priority of rear virtual receiving locations (P', P1'..P5'), in case of multiple virtual receiving locations (P', P1'..P5') located one behind another,
d) storing the storage object (4, 4a, 4b) on a physical receiving location (P, P1..P5) of the storage region (B, B1..B3) which is assigned to the selected virtual receiving location (P', P1'..P5') by means of a storage and retrieval unit (11) displaceable in the longitudinal direction (x) of the storage rack (3a, 3b),
e) changing a status of the virtual receiving location (P', P1'..P5') in the electronic memory (22), which specifies whether the assigned physical receiving location (P, P1..P5) is occupied by a storage object (4, 4a, 4b), from unoccupied to occupied,
f) limiting the virtual receiving locations (P', P1'..P5') in the storage region segmentations (S1..S6) assigned to the storage region (B, B1..B3) to virtual receiving locations (P', P1'..P5') which enable the storage of another storage object (4, 4a, 4b) on a physical receiving location (P, P1..P5), in the electronic memory (22), and
g) repeating the steps b) to f).

2. The method according to claim 1, **characterized in that** the limiting of the virtual receiving locations (P', P1'..P5') in step f) comprises a limiting of the storage region segmentations (S1..S6) assigned to the storage region (B, B1..B3) to one or multiple storage region segmentation(s) (S1..S6) which include the selected virtual receiving location (P', P1'..P5'), in the electronic memory.

3. The method according to claim 1 or 2, **characterized in that**, as a criterion for the selection of a virtual receiving location (P', P1'..P5') in step c), a maximum number of virtual receiving locations (P', P1'..P5') which remain after the limiting of the virtual receiving locations (P', P1'..P5') in step f) is provided.

4. The method according to claim 2, **characterized in that**, as a criterion for the selection of a virtual receiving location (P', P1'..P5') in step c), a maximum number of storage region segmentations (S1..S6) which remain after the limiting of the storage region segmentations (S1..S6) assigned to the storage region (B, B1..B3) in step f) is provided.

5. The method according to any one of the claims 1 to 4, **characterized in that** a virtual receiving location (P', P1'..P5') is further selected according to one or multiple of the following criteria: turnover rate of the storage object (4, 4a, 4b), even occupation of the rack storage system (1) by storage objects, accumulation of storage objects (4, 4a, 4b) of the same or of a similar storage-object type, filling level in a storage object (4, 4a, 4b) configured as loading aid, filling level of a storage region (B, B1..B3), separation of (a) hazardous good(s) from non-hazardous storage objects (4, 4a, 4b), transport route of a storage object (4, 4a, 4b) from a physical receiving location (P, P1..P5) to a delivery device, wherein the storage object (4, 4a, 4b) is transported on said transport route by means of the storage and retrieval unit (11), transport route of a storage object (4, 4a, 4b) from a receiving device to a physical receiving location (P, P1..P5), wherein the storage object (4, 4a, 4b) is transported on said transport route by means of the storage and retrieval unit (11), prioritization of larger front virtual receiving locations (P', P1'..P5') or physical receiving locations (P, P1..P5), in case of multiple virtual receiving locations (P', P1'..P5') or physical receiving locations (P, P1..P5) located one behind another, minimization of the time required for storing by means of the storage and retrieval unit (11), maximization of the number of the storage objects (4, 4a, 4b) stored at a time by means of the storage and retrieval unit (11).

6. The method according to any one of the claims 3 to 5, **characterized in that** one or multiple of said criteria are taken into account during a rearranging operation, in which already-stored storage objects (4, 4a, 4b) are rearranged to another physical receiving location (P, P1..P5), wherein the steps b) to f) are executed after the removal of a storage object (4, 4a, 4b) from its original physical receiving location (P, P1..P5) during the storing on the other physical receiving location (P, P1..P5).

7. The method according to any one of the claims 1 to 6, **characterized in that** the steps b) to f) are executed for multiple storage objects (4, 4a, 4b) at a time, wherein the storage objects (4, 4a, 4b) are stored in one or multiple storage region segmentation(s) (S1..S6) in step c) and in a single storage region (B, B1..B3) in step d), wherein the storage and retrieval unit is configured for storing more than one storage object in a single step.

8. The method according to claim 7, **characterized in that** the physical receiving locations (P, P1..P5) of the storage objects (4, 4a, 4b) are arranged one behind another in a storage direction (z).

9. The method according to any one of the claims 1 to 8, **characterized in that**
multiple storage region segmentations (S1..S6) are combined to a meta segmentation (M1..M3), wherein, in step c), a virtual receiving location (P', P1'..P5') is first selected in the plurality of meta segmentations (M1..M3) and a virtual receiving location (P', P1'..P5') is then selected in the plurality of storage region segmentations (S1..S6) of the selected meta segmentation (M1..M3), and
in step f), the meta segmentations (M1..M3) assigned to the storage region (B, B1..B3) are limited, in the electronic memory (22), to one or multiple meta segmentation(s) (M1..M3) which include the selected virtual receiving location (P', P1'..P5').

10. The method according to any one of the claims 1 to 9, **characterized in that** the storage region segmentations (S1..S6) assigned to a storage region (B, B1..B3) are sorted on the basis of a sorting criterion, and the storage region segmentation (S1..S6) that comprises the selected virtual receiving location (P', P1'..P5') and has the highest priority is selected in step c).

11. The method according to any one of the claims 1 to **10, characterized in that** the virtual receiving location (P', P1'..P5') that offers the best use of space by the storage object (4, 4a, 4b) is selected in step c).

12. The method according to any one of the claims 1 to 11, **characterized in that** the step f) is executed in the same manner for other storage regions (B, B1..B3).

13. A rack storage system (1), comprising
at least one storage rack (3a, 3b) for receiving multiple storage objects (4, 4a, 4b) of different storage-object types, which comprises uprights (6), rack levels (E) located on top of one another and a plurality of storage regions (B, B1..B3), wherein the storage regions (B, B1..B3) are respectively arranged between two uprights (6) spaced apart from each other in a longitudinal direction (x) of the storage rack (3a, 3b),
at least one storage and retrieval unit (11) for storing the storage objects (4, 4a, 4b) that is displaceable in the longitudinal direction (x) of the storage rack (3a, 3b), and
a warehouse management system (21), to which an electronic memory (22) is allocated,
wherein the warehouse management system (21) is configured for executing the following steps:
a) assigning multiple storage region segmentations (S1..S6) to a storage region (B, B1..B3) of the storage regions (B, B1..B3) in the electronic memory (22) for the plurality of storage regions (B, B1..B3), wherein the storage region segmentations (S1..S6) respectively comprise a plurality of virtual receiving locations (P', P1'..P5') for the storage objects (4, 4a, 4b) and specify a possible arrangement of the storage-object types inside said storage region (B, B1..B3),
b) acquiring the storage-object type of a storage object to be stored (4, 4a, 4b),
c) selecting a virtual receiving location (P', P1'..P5') for the storage-object type of the storage object (4, 4a, 4b) to be stored in the plurality of storage region segmentations (S1..S6), wherein the virtual receiving location (P', P1'..P5') enables the storage of the storage-object type of said storage object (4, 4a, 4b), wherein the virtual receiving location (P', P1'..P5') is selected according to the criterion of priority of rear virtual receiving locations (P', P1'..P5'), in case of multiple virtual receiving locations (P', P1'..P5') located one behind another,
d) controlling the storage and retrieval unit (11) for the purpose of storing the storage object (4, 4a, 4b) on a physical receiving location (P, P1..P5) of the storage region (B, B1..B3) which is assigned to the selected virtual receiving location (P', P1'..P5'),
e) changing a status of the virtual receiving location (P', P1'..P5') in the electronic memory (22), which specifies whether the assigned physical receiving location (P, P1..P5) is occupied by a storage object (4, 4a, 4b), from unoccupied to occupied,
f) limiting the virtual receiving locations (P', P1'..P5') in the storage region segmentations (S1..S6) assigned to the storage region (B, B1..B3) to virtual receiving locations (P', P1'..P5') which enable the storage of another storage object (4, 4a, 4b) on a physical receiving location (P, P1..P5), in the electronic memory (22), and
g) repeating the steps b) to f).

14. The rack system according to claim 13, **characterized in that** the limiting of the virtual receiving locations (P', P1'..P5') in step f) comprises a limiting of the storage region segmentations (S1..S6) assigned to the storage region (B, B1..B3) to one or multiple storage region segmentation(s) (S1..S6) which include the selected virtual receiving location (P', P1'..P5'), in the electronic memory.

## Revendications

1. Procédé pour emmagasiner plusieurs objets à stocker (4, 4a, 4b) de types différents dans un rayonnage de stockage (3a, 3b) qui comprend des montants de rayonnage (6), des niveaux de rayonnage superposés (E) et une pluralité de zones de stockage (B, B1..B3), les zones de stockage (B, B1.. B3) étant agencées chacune entre deux montants (6) espacés dans une direction longitudinale (x) du rayonnage de stockage (3a, 3b), le stockage des objets stockés (4, 4a, 4b) étant commandé par un système de gestion de stockage (21) auquel est affectée une mémoire électronique (22), et le procédé comprenant les étapes suivantes :
a) Attribution de plusieurs segmentations de zones de stockage (S1..S6) à une zone de stockage (B, B1..B3) des zones de stockage (B, B1..B3) dans la mémoire électronique (22) pour la pluralité de zones de stockage (B, B1..B3), les segmentations de zones de stockage (S1..S6) comprenant chacune une pluralité d'emplacements virtuels (P', P1'..P5') pour les objets stockés (4, 4a, 4b) et indiquant une disposition possible des types d'objets stockés à l'intérieur de ladite zone de stockage (B, B1..B3),
b) Enregistrement du type d'objet à stocker (4, 4a, 4b),
c) Sélection d'un emplacement virtuel (P', P1'..P5') pour le type d'objet à stocker (4, 4a, 4b) dans la pluralité de segmentations de zones de stockage (S1..S6) par le système de gestion de stockage (21), l'emplacement virtuel (P', P1'..P5') permettant le stockage du type d'objet stocké de l'objet stocké (4, 4a, 4b) mentionné, l'emplacement virtuel (P', P1'..P5') étant sélectionné selon le critère d'une priorisation des emplacements virtuels arrière (P', P1'..P5') en cas de pluralité d'emplacements virtuels (P', P1'..P5') situés les uns derrière les autres,
d) Stockage de l'objet stocké (4, 4a, 4b) sur un emplacement physique (P, P1 ..P5) de la zone de stockage (B, B1..B3) qui est attribué à l'emplacement virtuel sélectionné (P', P1'..P5'), à l'aide d'un appareil de desserte des rayonnages (11) mobile dans la direction longitudinale (x) du rayonnage de stockage (3a, 3b),
e) Modification d'un état de l'emplacement virtuel (P', P1'..P5') dans la mémoire électronique (22), qui indique si l'emplacement physique attribué (P, P1..P5) est occupé par un objet stocké (4, 4a, 4b), de non occupé à occupé,
f) Restriction des emplacements virtuels (P', P1'..P5') dans les segmentations de zone de stockage (S1..S6) attribuées à la zone de stockage (B, B1..B3) à des emplacements virtuels (P', P1'..P5') qui permettent le stockage d'un autre objet à stocker (4, 4a, 4b) sur un emplacement physique (P, P1..P5') dans la mémoire électronique (22), et
g) Répétition des étapes b) à f).

2. Procédé selon la revendication 1, **caractérisé en ce que** la restriction des emplacements virtuels (P', P1'..P5') à l'étape f) comprend une restriction des segmentations de zone de stockage (S1..S6) attribuées à la zone de stockage (B, B1..B3) à une ou plusieurs segmentations de zone de stockage (S1..S6) qui contiennent l'emplacement virtuel sélectionné (P', P1'..P5') dans la mémoire électronique.

3. Procédé selon la revendication 1 ou 2, **caractérisé en ce qu'**à titre de critère pour la sélection d'un emplacement virtuel (P', P1'..P5') à l'étape c), il reste un nombre maximal d'emplacements virtuels (P', P1'..P5') qui sont prévus à l'étape f) après la restriction des emplacements virtuels (P', P1'..P5').

4. Procédé selon la revendication 2, **caractérisé en ce qu'**à titre de critère pour la sélection d'un emplacement virtuel (P', P1'..P5') à l'étape c), il reste un nombre maximal de segmentations de la zone de stockage (S1..S6) à l'étape f), après la restriction des segmentations de la zone de stockage (S1..S6) attribuées à la zone de stockage (B, B1..B3).

5. Procédé selon l'une des revendications 1 à 4, **caractérisé en ce qu'**un emplacement virtuel (P', P1'..P5') est en outre sélectionné selon un ou plusieurs des critères suivants : fréquence de rotation de l'objet stocké (4, 4a, 4b), répartition uniforme des objets stockés dans le système de rayonnage (1), cumul d'objets stockés (4, 4a, 4b) de type identique ou similaire, degré de remplissage d'un objet stocké (4, 4a, 4b) conçu comme moyen auxiliaire de chargement, degré de remplissage d'une zone de stockage (B, B1..B3), séparation des marchandises dangereuses des objets stockés non dangereux (4, 4a, 4b), trajet de déplacement d'un objet stocké (4, 4a, 4b) d'un emplacement physique (P, P1 ..P5) vers un dispositif de transfert, l'objet stocké (4, 4a, 4b) étant transporté sur ledit trajet de déplacement à l'aide de l'appareil de desserte des rayonnages (11), trajet de déplacement d'un objet stocké (4, 4a, 4b) d'un dispositif de transfert vers un emplacement physique (P, P1 ..P5), l'objet stocké (4, 4a, 4b) étant transporté sur ledit trajet de déplacement à l'aide de l'appareil de desserte des rayonnages (11), priorisation des emplacements virtuels avant (P', P1'..P5') ou des emplacements physiques (P, P1..P5) plus grands en cas de pluralité d'emplacements virtuels (P', P1'..P5') ou physiques (P, P1 ..P5) situés les uns derrière les autres, minimisation du temps de stockage par l'appareil de desserte des rayonnages (11), maximisation du nombre d'objets stockés (4, 4a, 4b) simultanément par l'appareil de desserte des rayonnages (11).

6. Procédé selon l'une des revendications 3 à 5, **caractérisé en ce qu'**un ou plusieurs des critères mentionnés sont pris en compte lors d'une opération de transfert, dans laquelle des objets stockés (4, 4a, 4b) déjà stockés sont transférés vers un autre emplacement physique (P, P1..P5), les étapes b) à f) étant exécutées après le retrait d'un objet stocké (4, 4a, 4b) de son emplacement physique d'origine (P, P1 ..P5) lors du stockage vers l'autre emplacement physique (P, P1..P5).

7. Procédé selon l'une des revendications 1 à 6, **caractérisé en ce que** les étapes b) à f) sont exécutées pour plusieurs objets stockés (4, 4a, 4b) en une seule fois, les objets stockés (4, 4a, 4b) sont stockés à l'étape c) dans une ou plusieurs segmentations de zone de stockage (S1..S6) et à l'étape d) dans une seule zone de stockage (B, B1..B3), le dispositif de desserte des rayonnages étant conçu pour stocker plus d'un objet stocké en une seule étape.

8. Procédé selon la revendication 7, **caractérisé en ce que** les emplacements physiques (P, P1..P5) des objets stockés (4, 4a, 4b) sont agencés les uns derrière les autres dans une direction de stockage (z).

9. Procédé selon l'une des revendications 1 à 8, **caractérisé**
**en ce qu'**une pluralité de segmentations de zone de stockage (S1..S6) sont regroupées en une méta-segmentation (M1..M3), dans lequel, à l'étape c), un emplacement virtuel (P', P1'..P5') est sélectionné dans la pluralité de méta-segmentations (M1..M3), puis un emplacement de stockage virtuel (P', P1'..P5') est sélectionné dans la pluralité de segmentations de zones de stockage (S1..S6) de la méta-segmentation sélectionnée (M1..M3), et
à l'étape f), les méta-segmentations (M1..M3) attribuées à la zone de stockage (B, B1..B3) dans la mémoire électronique (22) sont restreintes à une ou plusieurs méta-segmentations (M1..M3) qui contiennent l'emplacement virtuel sélectionné (P', P1'..P5').

10. Procédé selon l'une des revendications 1 à 9, **caractérisé en ce que** les segmentations de zone de stockage (S1..S6) attribuées à une zone de stockage (B, B1..B3) sont triées à l'aide d'un critère de tri et **en ce qu'**à l'étape c), la segmentation de zone de stockage (S1..S6) qui contient l'emplacement virtuel sélectionné (P', P1'..P5') et la priorité la plus élevée est sélectionnée.

11. Procédé selon l'une des revendications 1 à 10, **caractérisé en ce qu'**à l'étape c), l'emplacement virtuel (P', P1'..P5') qui offre la meilleure utilisation de l'espace par l'objet stocké (4, 4a, 4b) est sélectionné.

12. Procédé selon l'une des revendications 1 à 11, **caractérisé en ce que** l'étape f) est exécutée de la même manière pour d'autres zones de stockage (B, B1..B3).

13. Système de rayonnage (1) comprenant
au moins un rayonnage de stockage (3a, 3b) destiné à recevoir plusieurs objets stockés (4, 4a, 4b) de différents types, lequel rayonnage comporte des montants de rayonnage (6), des niveaux de rayonnage superposés (E) et une pluralité de zones de stockage (B, B1..B3) superposés, les zones de stockage (B, B1..B3) étant chacune agencées entre deux montants de rayonnage (6) espacés l'un de l'autre dans une direction longitudinale (x) du rayonnage de stockage (3a, 3b),
au moins un appareil de desserte des rayonnages (11) mobile dans la direction longitudinale (x) du rayonnage de stockage (3a, 3b) pour le stockage des objets stockés (4, 4a, 4b), et
un système de gestion de stockage (21) auquel est affectée une mémoire électronique (22),
le système de gestion de stockage (21) étant conçu pour exécuter les étapes suivantes :
a) Attribution d'une pluralité de segmentations de zones de stockage (S1..S6) à une zone de stockage (B, B1..B3) des zones de stockage (B, B1..B3) dans la mémoire électronique (22) pour la pluralité de zones de stockage (B, B1..B3), les segmentations de zones de stockage (S1..S6) comprenant chacune une pluralité d'emplacements virtuels (P', P1'..P5') pour les objets stockés (4, 4a, 4b) et indiquant une disposition possible des types d'objets stockés à l'intérieur de ladite zone de stockage (B, B1..B3),
b) Enregistrement du type d'objet à stocker d'un objet à stocker (4, 4a, 4b),
c) Sélection d'un emplacement virtuel (P', P1'..P5') pour le type d'objet à stocker de l'objet à stocker (4, 4a, 4b) dans la pluralité de segmentations de zones de stockage (S1..S6), l'emplacement virtuel (P', P1'..P5') permettant le stockage du type d'objet stocké de l'objet stocké (4, 4a, 4b) en question, l'emplacement virtuel (P', P1'..P5') étant sélectionné selon le critère de priorité des emplacements virtuels arrière (P', P1', P5') en cas de pluralité d'emplacements virtuels situés les uns derrière les autres (P', P1'..P5'),
d) Commande de l'appareil de desserte des rayonnages (11) en vue de stocker l'objet à stocker (4, 4a, 4b) sur un emplacement physique (P, P1..P5) de la zone de stockage (B, B1..B3) qui est attribué à l'emplacement virtuel sélectionné (P', P1'..P5'),
e) Modification d'un état de l'emplacement virtuel (P', P1'..P5') dans la mémoire électronique (22), qui indique si l'emplacement physique attribué (P, P1..P5) est occupé par un objet stocké (4, 4a, 4b), de non occupé à occupé,
f) Restriction des emplacements virtuels (P',P1'..P5') dans les segmentations de zone de stockage (S1..S6) attribuées à la zone de stockage (B, B1..B3) à des emplacements virtuels (P', P1'..P5') qui permettent le stockage d'un autre objet stocké (4, 4a, 4b) sur un emplacement physique (P, P1..P5) dans la mémoire électronique (22), et
g) Répétition des étapes b) à f).

14. Système de rayonnage selon la revendication 13, **caractérisé en ce que** la restriction des emplacements virtuels (P', P1'..P5') à l'étape f) comprend une restriction des segmentations de zone de stockage (S1..S6) attribuées à la zone de stockage (B, B1..B3) à une ou plusieurs segmentations de zone de stockage (S1..S6) qui contiennent l'emplacement virtuel sélectionné (P', P1'..P5').
